(19) **Europäisches Patentamt / European Patent Office / Office européen des brevets**

(11) **EP 4 776 552 A1**

(12) **EUROPEAN PATENT APPLICATION**
published in accordance with Art. 153(4) EPC

(43) Date of publication:
**15.07.2026 Bulletin 2026/29**

(21) Application number: **24861950.4**

(22) Date of filing: **03.09.2024**

(51) International Patent Classification (IPC):
**H04L 5/00** (2006.01)

(52) Cooperative Patent Classification (CPC):
**H04L 5/00; H04W 72/512**

(86) International application number:
**PCT/CN2024/116500**

(87) International publication number:
**WO 2025/051107 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.09.2023 CN 202311150500**

(71) Applicant: **Vivo Mobile Communication Co., Ltd.
Dongguan, Guangdong 523863 (CN)**

(72) Inventors:
• YUAN, Jiangwei
  Dongguan, Guangdong 523863 (CN)
• LIU, Hao
  Dongguan, Guangdong 523863 (CN)
• WU, Hao
  Dongguan, Guangdong 523863 (CN)
• ZHENG, Kaili
  Dongguan, Guangdong 523863 (CN)
• SONG, Yang
  Dongguan, Guangdong 523863 (CN)

(74) Representative: **Shieldmark
P.O. Box 90471
2509 LL The Hague (NL)**

(54) **DELAY FEEDBACK METHOD, TERMINAL, AND NETWORK-SIDE DEVICE**

(57) The present application discloses a delay feedback method, a terminal, and a network-side device, and pertains to the field of wireless communication technologies. The delay feedback method in the embodiments of the present application includes: obtaining, by a terminal based on a first reference signal, at least one target delay of at least one second reference signal relative to the first reference signal; and feeding back, by the terminal, the at least one target delay to a network-side device.

200

S210

A terminal obtains, based on a first reference signal, at least one target delay of at least one second reference signal relative to the first reference signal

S212

The terminal feeds back the at least one target delay to a network-side device

FIG. 2

EP 4 776 552 A1

**Description**

The present application claims priority to Chinese Patent Application No. 202311150500.9, filed with the China National Intellectual Property Administration on September 06, 2023, and entitled "DELAY FEEDBACK METHOD, TERMINAL, AND NETWORK-SIDE DEVICE", which is incorporated herein by reference in its entirety.

**TECHNICAL FIELD**

The present application pertains to the field of wireless communication technologies, and specifically relates to a delay feedback method, a terminal, and a network-side device.

**BACKGROUND**

The channel state information (Channel State Information, CSI) architecture can be divided into downlink CSI and uplink CSI, where the downlink CSI architecture: includes downlink physical channels and downlink reference signals; and the uplink CSI architecture includes uplink physical channels and uplink reference signals.

The downlink physical channel is typically used for data transmission, while the downlink reference signal is typically used for channel estimation to obtain downlink channel state information (CSI). The uplink physical channel is typically used for uplink data transmission, while the uplink reference signal is typically used for channel estimation to obtain uplink channel state information (CSI).

Generally, a terminal may determine a CSI report according to higher-layer signaling or a default rule. For example, for each CSI report configuration (CSI-ReportConfig), a network-side device associates a reference signal resource configuration (CSI-ResourceConfig) for channel measurement, a reference signal resource configuration for CSI interference measurement (CSI Interference Measurement, CSI-IM), or a reference signal resource configuration for non-zero power CSI reference signal (Non-Zero Power CSI-RS) resources. The terminal then measures the reference resources associated in these resource configurations to obtain corresponding channel information, thereby obtaining corresponding CSI information based on codebook configuration information and CSI report content associated with the CSI report configuration, and performing feedback via an uplink channel.

However, in the related art, the CSI report content generally includes at least one of a precoding matrix indicator (Precoding matrix indicator, PMI), a channel quality indicator (Channel quality indicator, CQI), a rank indicator (Rank indicator, RI), a layer indicator (Layer Indicator, LI), a CSI-RS resource indicator (CSI-RS Resource Indicator, CRI), a layer 1 reference signal received power (Layer 1 reference signal received power, LI-RSRP), or a layer 1 signal-to-noise and interference ratio (Layer 1 signal-to-noise and interference ratio, L1-SINR). As a result, the terminal does not feed back delay information to the network-side device, and thus cannot assist the network-side device in time synchronization or timing synchronization.

**SUMMARY**

Embodiments of the present application provide a delay feedback method, a terminal, and a network-side device, so as to address the problem that a terminal does not feed back delay to a network-side device.

According to a first aspect, a delay feedback method is provided, including: obtaining, by a terminal based on a first reference signal, at least one target delay of at least one second reference signal relative to the first reference signal; and feeding back, by the terminal, the at least one target delay to a network-side device.

According to a second aspect, a method for obtaining a delay is provided, including: obtaining, by a network-side device, at least one target delay fed back by a terminal, where the at least one target delay is used to indicate a delay of at least one second reference signal relative to a first reference signal.

According to a third aspect, a delay feedback apparatus is provided, including: an obtaining module, configured to obtain, based on a first reference signal, at least one target delay of at least one second reference signal relative to the first reference signal; and a feedback module, configured to feed back the at least one target delay to a network-side device.

According to a fourth aspect, an apparatus for obtaining a delay is provided, including: an obtaining module, configured to obtain at least one target delay fed back by the terminal, where the at least one target delay is used to indicate a delay of at least one second reference signal relative to a first reference signal; and a determining module, configured to determine, based on the at least one target delay, a delay of each second reference signal relative to the first reference signal.

According to a fifth aspect, a terminal is provided, where the terminal includes a processor and a memory, the memory is configured to store a program or instruction capable of running on the processor, and when the program or instruction is executed by the processor, the steps of the method according to the first aspect are implemented.

According to a sixth aspect, a terminal is provided, including a processor and a communication interface, where the processor is configured to implement the steps of the method according to the first aspect, and the communication interface is configured to communicate with external devices.

According to a seventh aspect, a network-side device is provided, where the network-side device includes a processor and a memory, the memory is configured to store a program or instruction capable of running on the processor, and when the program or instruction is executed by the processor, the steps of the method according to the second aspect are implemented.

According to an eighth aspect, a network-side device is provided, including a processor and a communication interface, where the processor is configured to implement the steps of the method according to the second aspect, and the communication interface is configured to communicate with external devices.

According to a ninth aspect, a readable storage medium is provided, where a program or instruction is stored on the readable storage medium, and when the program or instruction is executed by a processor, the steps of the method according to the first aspect are implemented, or the steps of the method according to the second aspect are implemented.

According to a tenth aspect, a delay feedback system is provided, including a terminal and a network-side device, where the terminal may be configured to execute the steps of the method according to the first aspect, and the network-side device may be configured to execute the steps of the method according to the second aspect.

According to an eleventh aspect, a chip is provided, where the chip includes a processor and a communication interface, the communication interface is coupled with the processor, and the processor is configured to run a program or instruction to implement the method according to the first aspect, or implement the method according to the second aspect.

According to a twelfth aspect, a computer program/program product is provided, where the computer program/program product is stored in a storage medium, and when the computer program/program product is executed by at least one processor, the steps of the delay feedback method according to the first aspect are implemented, or the steps of the method for obtaining a delay according to the second aspect are implemented.

In the embodiments of the present application, a terminal, based on a first reference signal, obtains at least one target delay of at least one second reference signal relative to the first reference signal, and feeds back the at least one target delay to a network-side device. This enables the network-side device to obtain the at least one target delay, thereby allowing the network-side device to perform time synchronization or timing synchronization based on the at least one target delay.

## BRIEF DESCRIPTION OF DRAWINGS

FIG. 1 shows a block diagram of a wireless communication system to which the embodiments of the present application are applicable;

FIG. 2 shows a schematic flowchart of a delay feedback method according to an embodiment of the present application;

FIG. 3 shows a schematic flowchart of a method for obtaining a delay according to an embodiment of the present application;

FIG. 4 shows a schematic structural diagram of a delay feedback apparatus according to an embodiment of the present application;

FIG. 5 shows a schematic structural diagram of an apparatus for obtaining a delay according to an embodiment of the present application;

FIG. 6 shows a schematic structural diagram of a communication device according to an embodiment of the present application;

FIG. 7 shows a schematic diagram of a hardware structure of a terminal according to an embodiment of the present application; and

FIG. 8 shows a schematic diagram of a hardware structure of a network-side device according to an embodiment of the present application.

## DESCRIPTION OF EMBODIMENTS

The technical solutions in the embodiments of the present application will be clearly described below in conjunction with the drawings in the embodiments of the present application. Obviously, the described embodiments are part of the embodiments of the present application, not all of them. Based on the embodiments in the present application, all other embodiments obtained by those of ordinary skill in the art fall within the protection scope of the present application.

Terms such as "first" and "second" in the present application are used to distinguish similar objects and are not used to describe a specific order or sequence. It should be understood that terms used in this way can be interchanged where appropriate, so that the embodiments of the present application can be implemented in an order other than those illustrated or described herein, and objects distinguished by "first" and "second" are generally of one type and do not limit the number of objects, for example, there can be one or more first objects. In addition, "or" in the present application indicates at least one of the connected objects. For example, "A or B" covers three schemes: scheme one: including A but not B; scheme two: including B but not A; scheme three: including both A and B. The character "/" generally indicates an "or" relationship between the associated objects before and after.

The term "indication" in the present application can be a direct indication (or explicit indication) or an indirect indication (or implicit indication). The direct indication can be understood as the sender explicitly informing the receiver of specific information, operations to be performed, or request results in the sent indication; the indirect indication can be understood as the receiver determining corresponding information according to the indication sent by the sender, or performing judgment and determining operations to be performed or request results according to the judgment result.

It is worth pointing out that the technology described in the embodiments of the present application is not limited to the Long Term Evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of the present application are often used interchangeably, and the technology described herein may be used in the systems and radio technologies as well as other systems and radio technologies. In the following descriptions, the new radio (New Radio, NR) system is described for an illustration purpose, and NR terms are used in most of the following description, but these technologies can also be applied to systems other than NR systems, such as the 6th Generation (6th Generation, 6G) communication system.

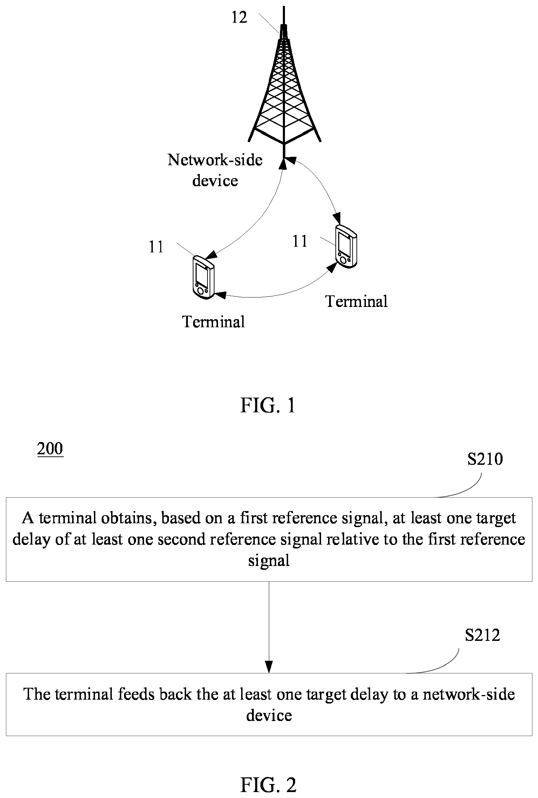

FIG. 1 is a block diagram of a wireless communication system to which the embodiments of the present application are applicable. The wireless communication system includes a terminal 11 and a network-side device 12. The terminal 11 can be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR), virtual reality (Virtual Reality, VR) device, a robot, a wearable device (Wearable Device), a flight vehicle (flight vehicle), vehicle user equipment (Vehicle User Equipment, VUE), a ship-borne device, a pedestrian user equipment (Pedestrian User Equipment, PUE), a smart home (home device with wireless communication function, such as a refrigerator, a television, a washing machine, or furniture), a game console, a personal computer (Personal Computer, PC), a teller machine, a self-service machine, or other terminal-side devices. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. The vehicle user equipment can also be called vehicle terminal, vehicle controller, vehicle module, vehicle component, vehicle chip, vehicle unit, or the like. It should be noted that the specific type of the terminal 11 is not limited in the embodiments of the present application. The network-side device 12 may include an access network device or a core network device, where the access network device may also be called a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be called Node B (Node B, NB), evolved Node B (Evolved Node B, eNB), next generation Node B (the next generation Node B, gNB), new radio Node B (New Radio Node B, NR Node B), access point, relay base station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home Node B (home Node B, HNB), home evolved Node B (home evolved Node B), transmission reception point (Transmission Reception Point, TRP), or some other suitable term in the field. As long as the same technical effect is achieved, the base station is not limited to specific technical vocabulary. It should be noted that in the embodiments of the present application, only the base station in the NR system is taken as an example for introduction, and the specific type of the base station is not limited.

The core network device can include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF or L-NEF), binding support function (Binding Support Function, BSF), or application function (Application Function, AF). It should be noted that in the embodiments of this application, only the core network device in the NR system is described as an example, and the specific type of the core network device is not limited.

To better understand the technical solutions provided by the present application, the technologies involved in the present application are first described.

1. CSI architecture

Typically, the CSI architecture can be divided into two parts: downlink CSI and uplink CSI. Downlink CSI architecture includes downlink physical channels and downlink reference signals; and uplink CSI architecture includes uplink physical channels and uplink reference signals.

The downlink physical channel is typically used for data transmission, while the downlink reference signal is typically used for channel estimation to obtain downlink channel state information (CSI). The uplink physical channel is typically used for uplink data transmission, while the uplink reference signal is typically used for channel estimation to obtain uplink channel state information (CSI).

In the 5G system, CSI is mainly used for Adaptive Beamforming and MIMO (Multiple Input Multiple Output) technologies to enhance wireless transmission bandwidth and reliability.

In general, the 5G CSI architecture is a very important technology in the 5G communication system, playing an important role in improving wireless transmission bandwidth and reliability and interference coordination.

2. CSI report content

Generally, a terminal may determine according to higher-layer signaling or a default rule that a CSI report may include one of 'none', 'cri-ri-pmi-cqi', 'cri-RI-il', 'cri-RI-CQI', 'cri-RSRP', 'cri-SINR', 'ssb-Index-RSRP', 'ssb-Index-SINR', or 'cri-RI-LI-PMI-CQI'.

If the terminal is configured with CSI-ReportConfig, and the upper layer parameter reportQuantity is set to "none", the terminal does not report any content for the CSI-ReportConfig.

3. CSI obtaining

For each CSI report configuration (CSI-ReportConfig), the network associates a reference signal resource configuration (CSI-ResourceConfig) for channel measurement, a reference signal resource configuration for interference measurement of CSI-IM (CSI interference measurement) resources, and/or a reference signal resource configuration for NZP-CSI RS (non-zero power CSI-RS) resources. The terminal measures the reference resources associated in these resource configurations to obtain corresponding channel information. At present, the corresponding channel information may generally be considered as baseband digital precoding matrix information and baseband modulation scheme recommendation information. Further, based on the codebook configuration information and report content associated with the CSI report configuration, the corresponding CSI information is obtained and fed back via an uplink channel.

For PMI feedback, if a Rel-15 Type1 codebook configuration is used, the terminal measures at most 8 channel measurement reference signals and selects one of the reference signals to feed back PMI. If a Rel-15 Type2/Rel-16 Type2/Rel-17 codebook is used, the terminal measures one channel measurement reference signal and feeds back PMI associated with the reference signal. If a Rel-18 Type2 coherent joint transmission (coherent joint transmission, CJT) codebook is used, the terminal measures at most 4 channel measurement reference signals, assumes that the 4 reference signals are associated with 4 TRPs, and uses channels associated with the 4 reference signals to obtain and feeds back PMI. If a Rel-18 Type2 predictive codebook is used, for periodic/semi-persistent channel measurement reference signals, the network-side device configures one reference signal, and the terminal uses multiple transmission occasions of the reference signal to obtain predictive PMI. For aperiodic channel measurement reference signals, the network-side device configures at most 12 reference signals, and the 12 reference signals are sent at predetermined time intervals, and the terminal uses one transmission occasion of the 12 reference signals to obtain predictive PMI.

However, there is no CSI feedback or delay feedback framework in the related art to support a terminal to assist the network-side device in time synchronization or timing synchronization. In view of this problem, embodiments of the present application provide a delay feedback method, a terminal, and a network-side device.

The following describes in detail a delay feedback solution provided in the embodiments of the present application through some embodiments and their application scenarios with reference to the accompanying drawings.

FIG. 2 shows a schematic flowchart of a delay feedback method according to an embodiment of the present application. The method 200 may be executed by a terminal. In other words, the method may be executed by software or hardware installed on the terminal. As shown in FIG. 2, the method may include the following steps.

S210. The terminal obtains, based on a first reference signal, at least one target delay of at least one second reference signal relative to the first reference signal.

In this embodiment of the present application, the first reference signal serves as a baseline reference signal, and the terminal obtains at least one target delay of other reference signals relative to the first reference signal.

The first reference signal includes, but is not limited to, CSI reference signal (CSI Reference Signal, CSI-RS), tracking reference signal (Tracking Reference Signal, TRS), synchronization signal/physical broadcast channel signal block (Synchronization Signal and PBCH block, SSB), CSI-RS set, TRS set, SSB set, and other reference signals or reference signal sets or reference signal ports of reference signals such as CSI-RS and TRS. The second reference signal includes, but is not limited to, CSI-RS, TRS, SSB, CSI-RS set, TRS set, SSB set, and other reference signals or reference signal sets or reference signal ports of reference signals such as CSI-RS and TRS. Optionally, the first reference signal and the second reference signal are not limited to being associated with a same reference signal set or being reference signals of a same type. Optionally, the first reference signal is one of the at least one second reference signal. Optionally, when the first reference signal is one of the at least one second reference signal, delays associated with the first reference signal in the at least one second reference signal are all 0, and the terminal does not feed back the delay associated with the first reference signal.

Optionally, one target delay may be obtained based on a first time associated with one first reference signal and a first time associated with one second reference signal. For example, the target delay may be obtained based on a difference between the two first times. The first time may be a time of a first path associated with the reference signal, or a time of a certain path associated with the reference signal, or a time determined by the terminal, or a protocol-specified time, or a time indicated by the network.

Alternatively, one target delay may be obtained based on a first time associated with a first reference signal and a second time associated with a second reference signal. For example, the target delay may be obtained based on a difference between the first time and the second time. The first time may be a time of a first path associated with the first reference signal, or a time of a certain path associated with the first reference signal, or a time determined by the terminal, or a protocol-specified time, or a time indicated by the network-side device. The second time may be a time of a first path associated with the second reference signal, or a time of a certain path associated with the second reference signal, or a time determined by the terminal, or a protocol-specified time, or a time indicated by the network.

S212. The terminal feeds back the at least one target delay to the network-side device.

In the technical solution provided in this embodiment of the present application, a terminal, based on a first reference signal, obtains at least one target delay of at least one second reference signal relative to the first reference signal, and feeds back the at least one target delay to a network-side device. This enables the network-side device to obtain the at least one target delay, and further allowing the network-side device to perform time synchronization or timing synchronization based on the at least one target delay.

In an optional implementation, before S210, the terminal may determine the first reference signal as a baseline reference signal, and may feed back or indicate the determined first reference signal to the network-side device, so that the network-side device learns the first reference signal selected by the terminal. Therefore, in this implementation, before S210, the method may further include at least one of the following step A, step B, or step C.

Step A. The terminal determines, according to a default rule or network signaling, the first reference signal used for obtaining the target delay. For example, the network-side device indicates a reference signal as the first reference signal via network signaling; or a default rule indicates that the terminal determines a first reference signal among a plurality of reference signals configured by the network-side device as the first reference signal; or, a default rule indicates that the terminal determines or selects a first reference signal among at least one reference signal as the first reference signal.

Step B. The terminal determines, according to a default rule or network signaling, a candidate reference signal set used for obtaining the target delay, and selects a first reference signal from the candidate reference signal set; where the candidate reference signal set includes at least one reference signal, and the first reference signal is one reference signal among the at least one reference signal.

Step C. The terminal feeds back or indicates the first reference signal to the network-side device.

For example, the network-side device configures or indicates, via network signaling, a plurality of reference signals for obtaining at least one target delay, and the first reference signal defaults to a first reference signal among the plurality of reference signals configured or indicated by the network-side device. For another example, the network-side device configures or indicates a plurality of reference signals for obtaining at least one target delay, and in addition, the network-side device indicates via higher-layer signaling that the first reference signal is one reference signal among the plurality of reference signals. For another example, the network-side device configures or indicates a plurality of reference signals for obtaining at least one target delay, and the network-side device indicates that the first reference signal is another reference signal associated with the plurality of reference signals or a reference signal in another reference signal set associated with the plurality of reference signals. For another example, the network-side device configures or indicates a plurality of reference signals for obtaining at least one target delay, and the terminal determines that the first reference signal is another reference signal associated with the plurality of reference signals, or another reference signal set associated with the plurality of reference signals, or a reference signal in the another reference signal set associated with the plurality of reference signals, or the first one in the another reference signal set associated with the plurality of reference signals. Alternatively, in another manner, the first reference signal is a reference signal fed back by the terminal. For example, the network-side device configures or indicates a plurality of reference signals for obtaining at least one target delay, and the terminal feeds back a first reference signal indication to indicate to the network that the first reference signal is one reference signal among the plurality of reference signals. For another example, the network-side device configures or indicates a plurality of reference signals for obtaining at least one target delay, and the terminal feeds back a first reference signal indication to indicate to the network that the first reference signal is another reference signal associated with the plurality of reference signals, or another reference signal set associated with the plurality of reference signals, or a reference signal in another reference signal set associated with the plurality of reference signals.

In an optional implementation, the target delay may be associated with a target row of a predetermined table, and each row of the predetermined table is associated with at least one of the following: one delay range, one delay value, or one unit delay. The unit delay may be used to represent the granularity of the table. In addition, each row of the predetermined table may also be associated with a coefficient range, and the coefficient range is a weighting coefficient of the unit delay. In this optional implementation, each possible delay may be recorded through the predetermined table, and the target delay is indicated by feeding back a target row of the predetermined table. Table 1 shows an implementation of a predetermined table. As shown in Table 1, each row of the predetermined table is associated with an index (Index), a value range (Value, RSTD, that is, coefficient range) of reference signal time difference (Reference Signal Time Difference, RSTD), and a unit delay (Unit). The terminal may indicate a value associated with the target delay to the network-side device by feeding back at least one index number to the network-side device.

**Table 1.**

| Index | Value, RSTD | Unit |
|---|---|---|
| 0 | RSTD<-1024 | Ts |
| 1 | -1024<=RSTD<-1023 | Ts |
| ... | ... | ... |
| 2048 | 1023<=RSTD<1024 | Ts |
| 2049 | 1024<=RSTD | Ts |

For a predetermined table, which is specified by a protocol and associated with target delays, optionally, the network-side device may limit, via first higher-layer signaling, the size of the predetermined table associated with the target delay, thereby reducing the indication overhead for the terminal to feed back the target delay to the network-side device. One optional manner is to control the table size by controlling the range of delay values, and another optional manner is to control the table size by selecting the starting row and ending row of the table.

For example, for the above predetermined table, the network-side device indicates via higher-layer signaling that the range of RSTD is from -512 to 512, then Table 1 may be changed to Table 2.

**Table 2.**

| Index | Value, RSTD | Unit |
|---|---|---|
| 0 | RSTD<-512 | Ts |
| 1 | -512<=RSTD<-511 | Ts |
| ... | ... | ... |
| 1024 | 511 <=RSTD<512 | Ts |
| 1025 | 512<=RSTD | Ts |

Alternatively, the network-side device may indicate to the terminal, via a second higher-layer signaling, one of a plurality of protocol-specified tables as the predetermined table, where each table among the plurality of tables may be associated with different precisions or delay ranges or unit delays (for example, as shown in the third column of the table), thereby enabling the network to flexibly adjust the range or granularity of the target delay indicated by the terminal, which helps to improve network flexibility. For example, for protocol-specified Table 3 and Table 4, the network-side device may indicate via the second higher-layer signaling that the terminal uses one of the tables to feed back the target delay.

**Table 3.**

| Index | Value, RSTD | Unit |
|-------|-------------|------|
| 0 | RSTD<-512 | Ts |
| 1 | -512<=RSTD<-511 | Ts |
| ... | ... | ... |
| 1024 | 511 <=RSTD<512 | Ts |
| 1025 | 512<=RSTD | Ts |

**Table 4.**

| Index | Value, RSTD | Unit |
|-------|-------------|------|
| 0 | RSTD<-512 | $2\times$Ts |
| 1 | -512<=RSTD<-511 | $2\times$Ts |
| ... | ... | ... |
| 1024 | 511<=RSTD<512 | $2\times$Ts |
| 1025 | 512<=RSTD | $2\times$Ts |

Alternatively, the network-side device may indicate the unit delay (the third column of the table) to the terminal via a third higher-layer signaling, thereby enabling the network-side device to flexibly adjust the range of the target delay indicated by the terminal, which helps to improve network flexibility.

In another optional implementation, the target delay may be associated with K1 times the preset unit delay, where K1 is a rational number, and the preset unit delay is a fixed rational number or associated with a fixed rational number or a fixed number or associated with a fixed number, such as an integer, a decimal, a fraction, or another constant.

In the above implementation, optionally, the preset unit delay may be specified by a protocol or indicated by the network-side device.

Optionally, the above preset unit delay may be K2 times the first predetermined value, where K2 is a rational number. Optionally, the first predetermined value may be a value indicated by the network-side device. For example, the first predetermined value may be a rational number related to a subcarrier spacing, or the first predetermined value may alternatively be a rational number related to the number of Fourier transform points. For example, the preset unit delay may be K2 times of Tc or Ts, where Ts=1/(2048 $\times$ 15000), Tc=1/(4096$\times$480000), and K2 is a rational number or fraction. Optionally, K2 is a value indicated by the network-side device or a value fed back by the terminal or a protocol-specified value.

Optionally, the K1 may be associated with one bit sequence fed back by the terminal, where the first bit or the most significant bit of the bit sequence serves as a sign bit, and the remaining bits serve as value bits. For example, if the terminal obtains a target delay of 20 times Ts, for the target delay, the terminal feeds back 010100, where the first bit serves as the sign bit and 0 indicates a positive value. Alternatively, the terminal feeds back 001010, where the most significant bit or the last bit serves as the sign bit and 0 indicates a positive value. If the terminal obtains a target delay of -20 times Ts, for the target delay, the terminal feeds back 110100, where the first bit serves as the sign bit and 1 indicates a negative value. Alternatively, the terminal feeds back 001011, where the most significant bit or the last bit serves as the sign bit and 1 indicates a negative value.

Optionally, the above preset unit delay may be C1 times a reciprocal of a bandwidth of the first reference signal, where C1 is a rational number.

Optionally, the above preset unit delay may be C2 times a reciprocal of a bandwidth of the bandwidth part (Bandwidth Part, BWP) associated with the first reference signal, where C2 is a rational number.

Optionally, the above preset unit delay may be K6 times $\pi$, where K6 is a rational number. For example, the unit delay may be $\pi$, $2\pi$, or $\pi/2$.

In an optional implementation, S212 may include the following step 1 or step 2.

Step 1. For one target delay, the terminal feeds back one bit sequence, where a specified bit of the bit sequence serves as the sign bit, and the remaining bits are used to indicate the magnitude of the target delay. For example, the terminal obtains a target delay of 20 times Tc, if the target delay is positive, that is, a difference between the time associated with the second reference signal and the time associated with the first reference signal is positive, for the target delay, the terminal feeds back 010100, where the first bit serves as the sign bit and 0 indicates a positive value, or the terminal feeds back 001010, where the most significant bit or the last bit serves as the sign bit and 0 indicates a positive value. If the target delay is negative, that is, a difference between the time associated with the second reference signal and the time associated with the first reference signal is negative, for the target delay, the terminal may feed back 110100, where the first bit serves as the sign bit and 1 indicates a negative value, or the terminal feeds back 001011, where the most significant bit or the last bit serves as the sign bit and 1 indicates a negative value.

Step 2. The terminal remaps the at least one target delay of the second reference signal relative to the first reference signal, and feeds back the remapped at least one target delay, where the values of the remapped at least one target delay are all positive. Optionally, the terminal takes the sum of each target delay and a target value as the remapped target delay, where the target value includes one of the following: K4 times a cyclic prefix length or K3 times a preset unit delay, K4 and K3 being rational numbers greater than 0.

For example, the terminal may perform a remapping operation on the at least one target delay as specified by a protocol or based on an indication from the network-side device, so that all target delays are greater than or equal to 0. In this case, for the one target delay or a K1 associated bit sequence fed back by the terminal, a sign bit is not required, and all bits serve as value bits. For example, the protocol agrees to add K4 times the cyclic prefix (Cyclic Prefix, CP) length to the target delay, or add K3 times the unit delay, where K3 and K4 are rational numbers or fractions.

Optionally, the terminal may determine, based on a maximum multiple K_max or maximum target delay indication range specified by a protocol or indicated by the network-side device, the bit width or length of the target delay or the K1 associated bit sequence fed back by the terminal. For the K1 or absolute value of K1 associated with the target delay, if it exceeds K_max, or for the K1 or absolute value of K1 exceeding the maximum target delay indication range, the terminal feeds back a maximum or minimum delay value that can be fed back, or feeds back a predefined value. Alternatively, the network-side device may indicate the bit width of a bit sequence to the terminal, and the terminal determines the target delay indication range based on the bit width. For delays exceeding the indication range, optionally, the terminal feeds back a maximum or minimum delay value that can be fed back, or feeds back a predefined value.

For example, the protocol agrees that the maximum multiple of one unit delay associated with one target delay is K_max, the bit width of the bit sequence associated with one target delay is equal to either the ceiling of $\log_2(K\_max)$ plus one, or the ceiling of $\log_2(K\_max)$. For another example, if the protocol agrees that the maximum target delay indication range associated with one target delay is [-K4, K4], the bit width of the bit sequence associated with one target delay is the ceiling of $\log_2(K4)$ plus 1.

In an optional implementation, S210 may include the following steps:

step 1. obtaining, by the terminal, at least one delay range configured by the network-side device based on the first reference signal; and

step 2. obtaining, by the terminal, at least one target delay of the at least one second reference signal relative to the first reference signal within the at least one delay range.

In the above implementation, based on a first reference signal, the network-side device may configure at least one delay range, and the terminal obtains at least one target delay within at least one delay range. Optionally, one delay range may be associated with a plurality of second reference signals, or one delay range is associated with one second reference signal.

In the above implementation, optionally, one delay offset and one target delay range within the at least one delay range are associated with one target delay, and the delay offset is used to indicate an offset of the target delay relative to a starting position of the target delay range.

Through the above implementation, the network-side device can assist the terminal in delay search or obtaining via higher-layer signaling, thereby reducing the complexity of terminal search.

In one optional manner, the network-side device configures one delay range, and the terminal obtains at least one target delay within the delay range. In this case, all target delays are associated with the same delay range. In this way, the terminal only needs to indicate the delay within the delay range to the network-side device, thereby reducing the complexity of terminal search and the indication overhead of the target delay. For one target delay, the terminal may feed back one delay offset, and the delay offset is used to indicate an offset of the target delay relative to the starting position of the delay range associated with this target delay. For example, if the network configures one delay range as [50×Ts, 500×Ts], the terminal obtains a target delay of 100×Ts within the range, and for the target delay, the terminal feeds back a delay offset as 50×Ts via a bit sequence.

In another optional manner, the network-side device configures a plurality of delay ranges, and the terminal obtains at least one target delay within the plurality of delay ranges. In this case, one target delay is associated with a plurality of delay ranges. In this way, the terminal only needs to indicate the delay range associated with each target delay and the delay within that delay range to the network-side device, thereby reducing the complexity of terminal search and the indication overhead of the target delay. For one target delay, the terminal feeds back one delay range indication and one delay offset, where the delay range indication is used to indicate the delay range associated with the target delay, and the delay offset is used to indicate an offset of the target delay relative to the starting position of the delay range associated with the target delay.

In another optional manner, the network-side device configures a plurality of delay ranges, and the terminal obtains one target delay within one delay range, that is, one target delay is associated with one delay range, and a plurality of target delays are associated with a plurality of delay ranges. In this way, the terminal only needs to indicate the delay within each delay range to the network-side device, thereby reducing the complexity of terminal search and the indication overhead of the target delay. For one target delay, the terminal feeds back one delay offset, and the delay offset is used to indicate an offset of the target delay relative to the starting position of the delay range associated with the target delay.

In another optional manner, the network-side device configures a plurality of delay ranges, and the terminal obtains at least one target delay within one delay range, the at least one target delay is associated with one second reference signal, that is, one second reference signal is associated with one delay range, a plurality of second reference signals are associated with a plurality of delay ranges, and one second reference signal is associated with at least one target delay. In this way, the terminal only needs to indicate the delay within each delay range to the network-side device, thereby reducing the complexity of terminal search and the indication overhead of the target delay. For one target delay, the terminal feeds back one delay offset, and the delay offset is used to indicate an offset of the target delay relative to the starting position of the delay range associated with the target delay.

In addition, for delay feedback, the network-side device may further limit, via higher-layer signaling, values of the target delays obtained by the terminal, so that the network-side device can obtain the corresponding multipath delay distribution based on the target delays fed back by the terminal, improving the transmission performance of the network. In one optional manner, the network-side device configures one multipath delay range, and the terminal obtains at least one target delay based on the multipath delay range. In this case, all target delays are associated with the same delay range. Through the at least one target delay, multipaths or multipath delay spreads or first path or first K paths (K may be specified by a protocol or configured by the network-side device) or multipaths occupying the major portion of energy, associated with multiple second reference signals, can be controlled within the multipath delay range. Optionally, for one second reference signal, the terminal obtains one target delay associated with one delay offset, and the delay offset is used to shift at least one path of the second reference signal into the multipath delay range.

For example, the network-side device configures one delay range as 0 to $50 \times Ts$. Based on one second reference signal, the terminal obtains the multipath characteristics of the second reference signal as follows: 5 main multipaths, with respective delays of $50 \times Ts$, $53 \times Ts$, $55 \times Ts$, $60 \times Ts$, and $70 \times Ts$. The terminal obtains, based on the delay range, a target delay associated with the second reference signal as $-20 \times Ts$. The target delay may cause all multipaths of the second reference signal to fall within the multipath delay range, or may cause first three paths of the second reference signal to fall within the multipath delay range, or may cause a first path of the second reference signal to fall within the multipath delay range. The terminal feeds back the target delay to the network via a bit sequence.

In another optional manner, the network-side device configures at least one multipath delay range or the terminal determines at least one multipath delay range via network signaling or as specified by a protocol, the terminal obtains at least one target delay based on the at least one multipath delay range. In this case, at least one target delay associated with one second reference signal is associated with the same delay range. Through the at least one target delay associated with the one second reference signal, multipaths or multipath delay spreads or first path or first K paths (K may be specified by a protocol or configured by the network-side device) or multipaths occupying the major proportion of energy, associated with the second reference signal, can be controlled within the multipath delay range. Optionally, for one second reference signal, the terminal obtains one target delay associated with one delay offset, and the delay offset is used to shift at least one path of the second reference signal into its associated multipath delay range.

In another optional implementation, S210 may include the following steps:

step 1. obtaining, by the terminal, a delay pattern (pattern) configured by the network-side device based on the first reference signal; and
step 2. obtaining, by the terminal based on the delay pattern, at least one target delay of the at least one second reference signal relative to the first reference signal.

In the above implementation, based on a first reference signal, the network-side device may configure one delay pattern (pattern), and the terminal may obtain at least one target delay based on the delay pattern, one target delay may be associated with one delay pattern and one delay offset, and the delay offset is used to indicate an offset of the target delay relative to a reference delay of the delay pattern.

Optionally, in the above implementation, the delay pattern may include at least one reference delay position, and the terminal may obtain the target delay based on the reference delay position and a multipath delay position obtained from the reference signal.

Optionally, one delay pattern is associated with a plurality of reference signals.

In the above implementation, for delay feedback, the network-side device may limit, via higher-layer signaling, values of the target delays obtained by the terminal, so that the network-side device can obtain the corresponding multipath delay distribution based on the target delays fed back by the terminal, improving the transmission performance of the network, that is, the network-side device enables the terminal to obtain the target delay associated with each reference signal based on a certain delay relationship or delay pattern.

In one optional manner, the network-side device configures one delay pattern, and the delay pattern includes at least one reference delay. The terminal obtains a target delay based on the reference delay of the delay pattern, and the one target delay is associated with one delay offset. Optionally, if the delay pattern includes one reference delay, the delay offset associated with each target delay is obtained based on that reference delay. Optionally, if the delay includes multiple reference delays, each target delay is associated with one reference delay.

For example, the delay pattern configured by the network for four reference signals is $\{10 \times Ts, 20 \times Ts, 30 \times Ts\}$ (three reference delays), and based on the four reference signals, the terminal obtains delays of other three reference signals (that is, the second reference signal) relative to a first reference signal (that is, the first reference signal) as $\{30 \times Ts, 50 \times Ts, 70 \times Ts\}$, where each delay is associated with one second reference signal, and the first delay is associated with the second reference signal among the 4 reference signals, the second delay is associated with the third reference signal among the 4 reference signals, and so on. For the first delay, based on the delay pattern, the delay offset obtained by the terminal is $-20 \times Ts$, for the second delay, the delay offset obtained by the terminal is $-30 \times Ts$, and for the third delay, the delay offset obtained by the terminal is $-40 \times Ts$. Further, the terminal obtains the target delay based on the obtained delay offsets and feeds back the target delay to the network-side device.

For another example, the delay pattern configured by the network-side device for 4 reference signals is $\{10 \times Ts\}$ (one reference delay), and based on the four reference signals, the terminal obtains delays of other three reference signals relative to a first reference signal as $\{30 \times Ts, 50 \times Ts, 70 \times Ts\}$, where each delay is associated with one reference signal among the other three reference signals, and the first delay is associated with the second reference signal among the four reference signals, the second delay is associated with the third reference signal among the four reference signals, and so on. For the first delay, based on the delay pattern, the delay offset obtained by the terminal is $-20 \times Ts$, for the second delay, the delay offset obtained by the terminal is $-40 \times Ts$, and for the third delay, the delay offset obtained by the terminal is $-60 \times Ts$. Further, the terminal obtains the target delay based on the obtained delay offsets and feeds back the target delay to the network-side device.

In yet another optional implementation, S210 can include the following steps:

step 1. obtaining, by the terminal, a candidate delay set configured by the network-side device, where the candidate delay set includes at least one candidate delay; and
step 2. obtaining, by the terminal based on the candidate delay set, at least one target delay of the at least one second reference signal relative to the first reference signal, where the target delay is associated with one candidate delay in the candidate delay set.

In the above implementation, for delay feedback, the network-side device may limit, via high-layer signaling, values of the target delays obtained by the terminal, thereby reducing the feedback overhead of the target delay. In one optional manner, the network-side device configures one candidate delay set, and the candidate delay set includes at least one candidate delay. One target delay is associated with one candidate delay in the candidate delay set, and the indication overhead of one target delay depends on the number of candidate delays in the candidate delay set. Thereby, the network can control the feedback overhead of the target delay by controlling the size of the candidate delay set. For example, the candidate delay set may include three delays $\{30 \times Ts, 50 \times Ts, 70 \times Ts\}$, if the target delay of a certain second reference signal relative to the first reference signal is $30 \times Ts$, when feeding back the target delay, the terminal may feed back 00, which is used to indicate that the target delay is the first delay in the candidate delay set.

In an optional implementation, before S210, the method may further include at least one of the following step 1 and step 2.

Step 1. The terminal selects the at least one second reference signal from a plurality of reference signals configured by the network-side device, where the at least one second reference signal is a part of the plurality of reference signals configured by the network-side device.

In this implementation, the terminal selects a part of the reference signals from a plurality of reference signals configured by the network-side device as the at least one second reference signal, and obtains at least one target delay associated with the second reference signal.

Optionally, when selecting a part of the reference signals from a plurality of reference signals configured by the network-side device as the at least one second reference signal, the terminal may select the at least one second reference signal from a plurality of reference signals configured by the network-side device based on the indication in at least one of the fourth higher-layer signaling and the fifth higher-layer signaling, where the fourth higher-layer signaling is used to indicate that the terminal feeds back target delays associated with a part of the plurality of reference signals, and the fifth higher-layer signaling is used to indicate the number of the at least one second reference signal.

For example, in a case that the network-side device has sent the fourth higher-layer signaling to the terminal, the terminal determines based on the fourth higher-layer signaling that a part of the reference signals need to be selected to obtain at least one target delay associated therewith. Accordingly, the terminal selects a part of the reference signals from the plurality of reference signals, and obtains at least one target delay associated with each reference signal within the part of the reference signals. Optionally, the terminal may feed back the number of the part of the reference signals selected by the terminal to the network-side device. Optionally, the terminal may also feed back a reference signal indication to the network-side device, where the reference signal indication is used to indicate the at least one second reference signal. Optionally, when the first reference signal is one reference signal among the part of the reference signals selected by the terminal, the reference signal indication only needs to indicate at least one second reference signal other than the first reference signal among the at least one second reference signal.

For another example, in a case that the network-side device has sent the fifth higher-layer signaling to the terminal, the terminal determines, based on the fifth higher-layer signaling, the number of reference signals in a part of reference signals to be selected. The terminal may then select the part of reference signals corresponding to the number from a plurality of reference signals, and obtain at least one target delay associated therewith. Optionally, the terminal may feed back a reference signal indication to the network-side device, where the reference signal indication is used to indicate the at least one second reference signal. Optionally, when the first reference signal is one reference signal among the part of the reference signals selected by the terminal, the reference signal indication only needs to indicate at least one second reference signal other than the first reference signal among the at least one second reference signal. Further optionally, the number indicated by the reference signal indication or the number of the second reference signals associated with the reference signal indication may be the number of reference signals indicated by the fifth higher-layer signaling or the number of reference signals indicated by the fifth higher-layer signaling minus the number of the first reference signal.

For another example, in a case that the network-side device has sent the fourth higher-layer signaling and the fifth higher-layer signaling to the terminal, the terminal determines based on the fourth higher-layer signaling that a part of the reference signals need to be selected to obtain at least one target delay associated therewith, and based on the fifth higher-layer signaling, the terminal may determine the number of the part of the reference signals to be selected. The terminal may then select the part of reference signals corresponding to the number from a plurality of reference signals, and obtain at least one target delay associated therewith. Optionally, the terminal may feed back a reference signal indication to the network-side device, where the reference signal indication is used to indicate the at least one second reference signal. Optionally, when the first reference signal is one reference signal among the part of the reference signals selected by the terminal, the reference signal indication only needs to indicate at least one second reference signal other than the first reference signal among the at least one second reference signal. Further optionally, the number indicated by the reference signal indication or the number of the second reference signals associated with the reference signal indication is the number of reference signals indicated by the fifth higher-layer signaling or the number of reference signals indicated by the fifth higher-layer signaling minus the number of the first reference signal.

It should be noted that, although the above description takes the fourth higher-layer signaling and the fifth higher-layer signaling as examples to respectively indicate the terminal to feed back target delays associated with a part of the plurality of reference signals and to indicate the number of the at least one second reference signal, it is not limited thereto. In practical applications, the same higher-layer signaling may also be used to indicate the terminal to feed back target delays associated with a part of the plurality of reference signals or indicate the number of the at least one second reference signal, which is not limited in the embodiments of the present application.

Optionally, when the terminal selects the at least one second reference signal from the plurality of reference signals configured by the network-side device, the terminal may select from the plurality of reference signals the reference signals whose delays relative to the first reference signal are less than a preset first delay threshold as the at least one second reference signal. Optionally, the first delay threshold may be configured by the network-side device, or specified by a protocol, or obtained via network signaling. In this optional implementation, when the target delay associated with a certain reference signal is greater than or equal to the first delay threshold, the terminal may not feed back the target delay associated with the reference signal.

Step 2. The terminal determines (or selects) the first reference signal from a plurality of reference signals configured by the network-side device, where the first reference signal is a part of the plurality of reference signals configured by the network-side device.

For example, the terminal may determine, according to a default rule, one reference signal among a plurality of reference signals configured by the network-side device as the first reference signal, for example, the first reference signal among the plurality of reference signals. Alternatively, the terminal may determine a part of the plurality of reference signals indicated by the network-side device as the first reference signal. Alternatively, the terminal may determine one reference signal specified by a protocol among the plurality of reference signals indicated by the network-side device as the first reference signal. Alternatively, the terminal determines the reference signal with the strongest received signal power or energy as the first reference signal. Alternatively, the terminal determines the first reference signal among the at least one second reference signal as the first reference signal. Alternatively, the terminal determines a certain reference signal among the at least one second reference signal as the first reference signal. Alternatively, the terminal determines a certain reference signal among the plurality of reference signals as the first reference signal. Alternatively, the terminal determines the first reference signal among the plurality of reference signals as the first reference signal.

Optionally, after the terminal selects the at least one second reference signal from the plurality of reference signals configured by the network-side device, the terminal may feed back a reference signal indication to the network-side device, where the reference signal indication is used to indicate the at least one second reference signal. In this optional implementation, the reference signal indication is used to indicate which reference signals the terminal has fed back target delays associated with. Further, the overhead of the reference signal indication is related to the number of the plurality of reference signals configured by the network-side device.

Optionally, after the terminal selects the at least one second reference signal from a plurality of reference signals configured by the network-side device, the terminal can also feed back the number of the at least one second reference signal to the network-side device. Further, the overhead for the terminal to feed back the number is related to the number of the plurality of reference signals configured by the network-side device.

Optionally, after the terminal selects the at least one second reference signal from the plurality of reference signals configured by the network-side device, the terminal may feed back a first specific value to the network-side device for delays associated with unselected reference signals among the plurality of reference signals. Optionally, the first specific value may be associated with one of the following: a protocol-specified value, a value out of range (out of range, OOR), or an invalid value. For example, the network configures the terminal to feed back the delays of C2 reference signals among C1 reference signals (C2 < C1), and in this case, the overhead of the delay indication is related to C2. The terminal selects C3 reference signals among the C2 reference signals according to the channel state to obtain and feed back the delays (C3 < C2). For the unselected C2 - C3 reference signals, the terminal may feed back the first specific value for their associated delays.

In the above implementation, for delay feedback, the network-side device configures the terminal to obtain $K \times N$ target delays of N reference signals relative to the first reference signal, where N and K are positive integers, and K may indicate the number of target delays associated with each reference signal indicated by the network, which usually may be 1. Optionally, in practice, it may occur that the multipath estimation accuracy decreases due to reasons such as low received power of a part of the reference signals. In this case, the terminal may indicate this information to the network in some manners to improve network scheduling flexibility or assist the network in downlink transmission, thereby improving system transmission performance.

In one optional manner, the terminal selects to feed back a part of the reference signals among N reference signals to obtain at least one target delay. Optionally, the terminal selecting to feed back a part of the reference signals among N reference signals is configured by network higher-layer signaling. For example, the network may control, via higher-layer signaling, whether the terminal can select a part of the reference signals. Optionally, the network may configure, via higher-layer signaling, the number of the part of the reference signals selected by the terminal. For example, the network may control, via higher-layer signaling, the terminal to select three reference signals from four reference signals and feed back their associated target delays. Optionally, the terminal indicates to the network the number of the part of the reference signals. For example, the terminal indicates to the network through CSI report that the terminal has selected three reference signals from four reference signals and fed back their associated target delays. Optionally, the terminal feeds back a reference signal indication, where the reference signal indication is used to indicate which reference signals the terminal has fed back target delays associated with. Further, the overhead of the reference signal indication is related to N. Optionally, for at least one target delay associated with the reference signals not fed back by the terminal, the network may assume a specific value. The specific value may be associated with a protocol-specified value, or associated with OOR (out of range), or associated with an invalid value.

For example, in theory, the terminal may obtain N target delays based on N reference signals and one first reference signal. In practice, the terminal finds that the received power of a part of the reference signals is small, which reduces the accuracy of multipath identification, and in this case, the terminal may select to feed back some of the target delays among N target delays to the network.

Further, optionally, the network may impose restriction as needed to control the selection by the terminal. In one optional manner, a first delay threshold is configured by the network or specified by a protocol, and when the target delay associated with a certain reference signal is greater than or equal to the first delay threshold, the terminal does not obtain the target delay associated with the reference signal.

In another optional implementation, S210 may include the following steps:

step 1. obtaining, by the terminal, first quantity information configured or indicated by the network-side device, where the first quantity information includes at least one of the following: a maximum number D1 of target delays obtained for one second reference signal or a maximum number D2 of target delays obtained for the at least one second reference signal, where D1 and D2 are positive integers; and

step 2. obtaining, by the terminal based on the first reference signal, at least one of the following:

> D3 target delays of one second reference signal relative to the first reference signal, where D3 is a positive integer, and D3 is less than or equal to D1; or
> D4 target delays of the at least one second reference signal relative to the first reference signal, where D4 is a positive integer, and D4 is less than or equal to D2.

In the above implementation, based on the first reference signal, the network-side device configures or indicates that at most D1 target delays are obtained for one second reference signal, while the terminal may obtain D3 (D3 being less than or equal to D1) target delays. Further, the terminal may indicate to the network-side device the number of the target delays associated with the second reference signal. Optionally, for the D1 - D3 target delays not obtained by the terminal, the network-side device may assume the target delays to be a specific value, where the specific value may be associated with a protocol-specified value, or associated with OOR (out of range), or associated with an invalid value. When the terminal obtains D3 (D3 being less than or equal to D1) target delays, a second delay threshold is configured by the network-side device or specified by a protocol; and when a certain delay is greater than or equal to the second delay threshold, the terminal does not feed back the target delay associated with the delay.

In the above implementation, based on the first reference signal, the network-side device configures or indicates that at most D2 target delays are obtained for the at least one second reference signal, while the terminal may obtain D4 (D4 being less than or equal to D2) target delays for the at least one second reference signal. Further, the terminal may indicate to the network-side device the number of the target delays associated with the at least one second reference signal. Optionally, for the D2 - D4 target delays not obtained by the terminal, the network-side device may assume the target delays to be a specific value, where the specific value may be associated with a protocol-specified value, or associated with OOR (out of range), or associated with an invalid value. When the terminal obtains D4 (D4 being less than or equal to D2) target delays, a second delay threshold is configured by the network-side device or specified by a protocol, and when a certain delay is greater than or equal to the second delay threshold, the terminal does not feed back the target delay associated with the delay. In an implementation, when it is agreed that one target delay is obtained by the terminal for one second reference signal, the above implementation is equivalent to a case in which the terminal selects a part of second reference signals from the at least one second reference signal configured or indicated by the network to feed back target delays. For example, the protocol agrees that one target delay is obtained by the terminal for one second reference signal, then the network-side device configures or indicates that at most D2 target delays are obtained for the D2 second reference signals, while the terminal may obtain D4 (D4 being less than or equal to D2) target delays for the D2 second reference signals, that is, the terminal selects D4 reference signals from D2 second reference signals to obtain the target delays. Further, the terminal may indicate to the network-side device the number of the target delays associated with the D2 second reference signals.

In the above implementation, for delay feedback, based on the first reference signal, the network-side device may configure for the terminal or indicate to the terminal that at most D1 target delays are obtained for one reference signal, where D1 is a positive integer. Alternatively, the network-side device may configure for the terminal or indicate to the terminal that at most D2 target delays are obtained for a plurality of reference signals, where D2 is a positive integer. Optionally, in practice, it may occur that the multipath estimation accuracy decreases due to reasons such as low received power of a part of the reference signals. In this case, the terminal may indicate this information to the network in some ways to improve network scheduling flexibility or assist the network in downlink transmission, thereby improving system transmission performance.

In one optional manner, the terminal selects D3 delays to further obtain D3 target delays. The D3 is a positive integer less than or equal to D1. For example, the network-side device configures that at most four target delays are obtained or fed back for one second reference signal, and the terminal selects two delays with relatively accurate delays or larger amplitudes associated with delays based on the delays actually obtained by the second reference signal, obtains two target delays based on the two delays. Further the terminal feeds back the two target delays. Optionally, the terminal may indicate to the network the number of target delays obtained by the terminal for each reference signal. Optionally, the overhead of the indication of the number of target delays is related to D1.

In yet another optional implementation, S210 may include the following step 1 and step 2:

> step 1. obtaining, by the terminal, second quantity information configured or indicated by the network-side device, where the second quantity information includes at least one of the following: the number D5 of target delays obtained for one second reference signal or the number D6 of target delays obtained for the at least one second reference signal, where D5 and D6 are positive integers; and
> step 2. obtaining, by the terminal based on the first reference signal, at least one of the following:
>
> > (1) D5 target delays of one second reference signal relative to the first reference signal, where further optionally, among the D5 target delays, there exist D7 target delays associated with a second specific value, D7 is a positive integer, and D7 is less than or equal to D5; and optionally, the second specific value may be associated with one of the following: a protocol-specified value, a value out of range, or an invalid value; or

(2) D6 target delays of the at least one second reference signal relative to the first reference signal, where further optionally, among the D6 target delays, there exist D8 target delays associated with a second specific value, D8 is a positive integer, and D8 is less than or equal to D6; and optionally, the second specific value may be associated with one of the following: a protocol-specified value, a value out of range, or an invalid value.

In the above step 2, specially and optionally, when it is agreed that one target delay is obtained by the terminal for one second reference signal, the implementation is equivalent to a case in which the terminal selects a part of the second reference signals from the at least one second reference signal configured or indicated by the network to feed back the specific value.

In the above implementation, for delay feedback, based on the first reference signal, the network configures for the terminal or indicate to the terminal that D5 target delays are obtained for one second reference signal, where D5 is a positive integer. Alternatively, the network configures for the terminal or indicate to the terminal that D6 target delays are obtained for the at least one second reference signal, where D6 is a positive integer. Optionally, in practice, it may occur that the multipath estimation accuracy decreases due to reasons such as low received power of a part of the reference signals. In this case, the terminal may indicate this information to the network-side device in some ways to improve network scheduling flexibility or assist the network in downlink transmission, thereby improving system transmission performance.

In one optional manner, among the D5 target delays obtained by the terminal, there exist D7 target delays associated with the second specific value. Alternatively, among the D6 target delays obtained by the terminal, there exist D8 target delays associated with the second specific value. In this way, the network-side device may obtain the channel multipath characteristics of each second reference signal, further improving system transmission performance. Optionally, the second specific value may be associated with a protocol-specified value, or associated with OOR (out of range), or associated with an invalid value.

For example, the network-side device configures N reference signals, and configures that one target delay is obtained by the terminal for one reference signal. In this case, the terminal needs to feed back N target delays, and the terminal may associate some of the N target delays with a specific value OOR according to network signaling configuration.

For another example, the network-side device configures N reference signals, and configures that two target delays are obtained by the terminal for one reference signal. In this case, the terminal needs to feed back 2N target delays, and the terminal may associate some of the 2N target delays with a specific value OOR according to network signaling configuration.

Further, optionally, the network-side device may impose restriction as needed to control the feedback of the second specific value by the terminal. In one optional manner, a third delay threshold is configured by the network-side device or specified by a protocol, and when a certain delay is greater than or equal to the third delay threshold, the target delay associated with the delay is associated with the second specific value.

In an optional implementation, in feeding back the at least one target delay to the network-side device, the terminal may separately feed back the at least one target delay, for example, the terminal sends a delay report to the network-side device, where the delay report includes the at least one target delay.

In another optional implementation, in feeding back the at least one target delay to the network-side device, the terminal may feed back the at least one target delay together with the channel state information CSI report, where the CSI report includes at least one of the following: PMI, CQI, RI, LI, CRI, L1-RSRP, or L1-SINR.

One possible manner is to introduce a new feedback quantity in the CSI report to indicate the delay. Optionally, a new feedback quantity is introduced in addition to PMI/CQI/RI/CRI. Optionally, a feedback quantity may alternatively be added in the feedback quantity i1 or i2 associated with PMI. Another possible manner is to use an existing feedback quantity associated with PMI to feed back the delay. Optionally, for using the existing feedback quantity associated with PMI to feed back the delay, only a case in which codebookMode in the higher-layer signaling is configured as model is supported, or a case in which $i_{1,9}$ exists in codebook parameters is supported.

Optionally, when the at least one target delay is fed back together with the channel state information CSI report, the target delay, in addition to being associated with the target row of the above predetermined table or K1 times the preset unit delay, may also be associated with at least one of the following:

(1) K5 times N3, where N3 is the number of PMI subbands, and K5 is a rational number;
(2) K7 times the reciprocal of the bandwidth of the BWP associated with the CSI report, K7 being a rational number; or
(3) a value within a predefined range.

The above predefined range may include one of the following:

$$\{0,1,2 \dots, QN_3 - 1\};$$

or

$$\left\{0, \frac{1}{4}, \frac{1}{2} \dots, N_3 - \frac{1}{4}, N_3, N_3 + \frac{1}{4}, \dots, QN_3 - \frac{1}{4}\right\};$$

where

Q is specified by a protocol or obtained through an indication in network higher-layer signaling.

Through the above optional implementation, compared with CJT CSI feedback, the terminal can increase the delay range without increasing the number of times the terminal calculates subband PMIs.

Through the above method provided in the embodiments of the present application, the terminal, based on a first reference signal, obtains at least one target delay of at least one second reference signal relative to the first reference signal, and feeds back the at least one target delay to the network-side device, thereby enabling the network-side device to obtain delay information among a plurality of reference signals, or among a plurality of cells, or among a plurality of TRPs, and further enabling the network-side device to pre-compensate the delays based on the delays fed back by the terminal or compensate synchronization delays among TRPs, thereby improving system transmission performance. In addition, through the way the terminal selects or the network assists, the overhead of the terminal searching delay or indicating delay can be reduced.

Optionally, for all the above implementations provided in the embodiments of the present application, the implementations can be extended to the frequency offset or frequency shift among a plurality of reference signals or a plurality of cells or a plurality of TRPs. That is, the terminal, based on a first reference signal, obtains at least one target frequency offset of at least one second reference signal relative to the first reference signal, and feeds back the at least one target frequency offset to the network-side device, thereby enabling the network-side device to obtain the frequency offset or frequency shift information among a plurality of reference signals or a plurality of cells or a plurality of TRPs, and further enabling the network-side device to pre-compensate based on the frequency offset fed back by the terminal or compensate the frequency offset among TRPs, thereby improving system transmission performance. Optionally, the target frequency offset may be associated with the target row of the predetermined table or F1 times the preset unit frequency offset, where F1 is a rational number, and the unit frequency offset may be F2 times the subcarrier spacing or F3 times $\pi$ or a predetermined protocol-specified value. Further, optionally, the terminal may select a part of the reference signals or some of the target frequency offsets to feed back, or feed back a specific value (for example, invalid value or OOR) for some of the target frequency offsets based on the method provided in this embodiment. Further, optionally, the network may configure, based on the method provided in this embodiment, an obtaining range of the target frequency offset to assist the terminal in obtaining the target frequency offset more quickly. Alternatively, the network may configure, based on the method provided in this embodiment, candidate values or candidate value set of the target frequency offset to assist the terminal in obtaining the target frequency offset more quickly or control the feedback overhead. Further, optionally, the target frequency offset may be separately fed back or fed back together with the CSI report based on the method provided in this embodiment. When fed back together with the CSI report, the target frequency offset may further be associated with F4 times a PMI subband size. F2/F3/F4 are rational numbers.

Optionally, the term "associated" described in the embodiments of the present application is not limited to the following interpretations:

A is associated with B, meaning that A is B;
A is associated with B, meaning that B can be obtained through A; and
A is associated with B, meaning that B can be determined through A.

Based on the same technical concept, an embodiment of the present application further provides a method for obtaining a delay.

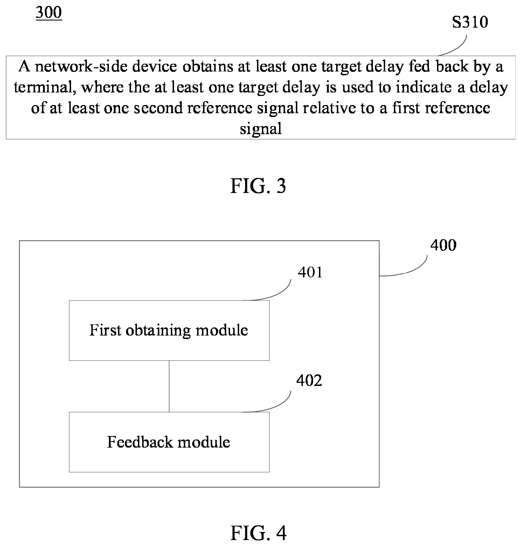

FIG. 3 is a schematic flowchart of a method for obtaining a delay according to an embodiment of the present application. The method 300 may be executed by a network-side device. In other words, the method may be performed by software or hardware installed on the network-side device. It should be noted that the following embodiments only describe the operations of the network-side device, and other matters not explicitly described may refer to the relevant descriptions of the above method 200.

As shown in FIG. 3, the method may include the following steps.

S310. A network-side device obtains at least one target delay fed back by a terminal, where the at least one target delay is used to indicate a delay of at least one second reference signal relative to a first reference signal.

In specific applications, the terminal may feed back the at least one target delay to the network-side device according to each implementation of the above method 200, for details, reference can be made to the relevant description in the above method 200, and details are not repeated here.

In an optional implementation, before the obtaining, by a network-side device, at least one target delay fed back by the terminal, the method further includes at least one of the following steps:

step 1. sending, by the network-side device, first network signaling to the terminal, where the first network signaling is used to indicate the first reference signal used for obtaining the target delay;

step 2. sending, by the network-side device, second network signaling to the terminal, where the second network signaling is used to indicate a candidate reference signal set for obtaining the target delay, where the candidate reference signal set includes at least one reference signal, and the first reference signal is one reference signal among the at least one reference signal; or

step 3. obtaining, by the network-side device, the first reference signal fed back or indicated by the terminal.

In an optional implementation, the target delay is associated with at least one of the following:

(1) the target row of a predetermined table, where each row of the predetermined table is associated with at least one of the following: one delay range, one delay value, or one unit delay; or

(2) K1 times the preset unit delay, where K1 is a rational number, and the preset unit delay is a fixed rational number or associated with a fixed rational number.

In an optional implementation, before the obtaining, by a network-side device, at least one target delay fed back by the terminal, the method further includes at least one of the following steps:

step 1. sending, by the network-side device, first higher-layer signaling to the terminal, where the first higher-layer signaling is used to indicate at least one of the following: a size of the predetermined table or a maximum value of K1;

step 2. sending, by the network-side device, second higher-layer signaling to the terminal, where the second higher-layer signaling is used to indicate that the predetermined table is the target table among a plurality of tables, where different tables among the plurality of tables are associated with different target information, and the target information includes at least one of the following: a unit delay, a maximum delay range, or a delay range; or

step 3. sending, by the network-side device, third higher-layer signaling to the terminal, where the third higher-layer signaling is used to indicate the unit delay of the predetermined table.

In an optional implementation, the obtaining, by a network-side device, at least one target delay fed back by the terminal includes one of the following steps:

step 1. receiving, by the network-side device, at least one bit sequence fed back by the terminal, determining a sign of the target delay corresponding to the bit sequence based on a value of a specified bit of the bit sequence, and determining a magnitude of the target delay corresponding to the bit sequence based on values of the remaining bits of the bit sequence; and

step 2. receiving, by the network-side device, at least one target delay fed back by the terminal, and remapping the received at least one target delay to obtain remapped at least one target delay.

In an optional implementation, the remapping the received at least one target delay includes:

taking a difference between each received target delay and a target value as the remapped target delay, where the target value includes one of the following: K4 times the cyclic prefix length or K3 times the preset unit delay, K4 and K3 being rational numbers greater than 0.

In an optional implementation, before the obtaining, by a network-side device, at least one target delay fed back by the terminal, the method further includes at least one of the following steps:

step 1. configuring, by the network-side device for the terminal, at least one delay range based on the first reference signal, where one target delay is associated with one delay offset and one target delay range within the at least one delay range, and the delay offset is used to indicate an offset of the target delay relative to a starting position of the target delay range;

step 2. configuring, by the network-side device for the terminal, a delay pattern based on the first reference signal, where one target delay is associated with one delay pattern and one delay offset, and the delay offset is used to indicate an offset of the target delay relative to a reference delay of the delay pattern; or

step 3. configuring, by the network-side device for the terminal, a candidate delay set, where the candidate delay set includes at least one candidate delay, and the target delay is associated with one candidate delay in the candidate delay set.

In an optional implementation, before the obtaining, by a network-side device, at least one target delay fed back by a terminal, the method may further include:

configuring, by the network-side device, a plurality of reference signals for the terminal, where the at least one second reference signal is a part of the plurality of reference signals, or the first reference signal is a part of the plurality of reference signals.

In an optional implementation, before the obtaining, by a network-side device, at least one target delay fed back by the terminal, the method may further include:

sending, by the network-side device to the terminal, at least one of fourth higher-layer signaling and fifth higher-layer signaling, where the fourth higher-layer signaling is used to indicate that the terminal feeds back target delays associated with a part of the plurality of reference signals, and the fifth higher-layer signaling is used to indicate the number of the at least one second reference signal.

In an optional implementation, after the configuring, by the network-side device for the terminal, a plurality of reference signals, the method further includes at least one of the following steps:

step 1. receiving, by the network-side device, a reference signal indication sent by the terminal, where the reference signal indication is used to indicate the at least one second reference signal;
step 2. receiving, by the network-side device, the number of the at least one second reference signal fed back by the terminal; or
step 3. receiving, by the network-side device, a specific value fed back by the terminal for at least one target delay associated with unselected reference signals among the plurality of reference signals.

In an optional implementation, before the obtaining, by a network-side device, at least one target delay fed back by a terminal, the method further includes at least one of the following steps:

step 1. configuring, by the network-side device for the terminal, or indicating, by the network-side device to the terminal, first quantity information, where the first quantity information includes at least one of the following: a maximum number D1 of target delays obtained for one second reference signal or a maximum number D2 of target delays obtained for the at least one second reference signal, D1 is a positive integer, and D2 is a positive integer; or
step 2. configuring, by the network-side device for the terminal, or indicating, by the network-side device to the terminal, second quantity information, where the second quantity information includes at least one of the following: the number D5 of target delays obtained for one second reference signal or the number D6 of target delays obtained for the at least one second reference signal, D5 is a positive integer, and D6 is a positive integer.

In an optional implementation, the obtaining, by a network-side device, at least one target delay fed back by a terminal includes one of the following:

step 1. obtaining, by the network-side device, the at least one target delay separately fed back by the terminal; and
step 2. obtaining, by the network-side device, the at least one target delay fed back by the terminal together with a CSI report, where the CSI report includes at least one of the following: PMI, CQI, RI, LI, CRI, L1-RSRP, or L1-SINR.

In this embodiment of the present application, after the network-side device obtaining at least one target delay, the network-side device may obtain, based on the at least one target delay, delay information among a plurality of reference signals or a plurality of cells (for example, one reference signal is associated with at least one cell) or a plurality of TRPs (for example, one reference signal is associated with at least one TRP), and further may pre-compensate the delays based on the delays fed back by the terminal or compensate synchronization delay among TRPs, thereby improving system transmission performance.

The delay feedback method provided in this embodiment of the present application, may be executed by a delay feedback apparatus. In the embodiments of the present application, an example in which the delay feedback apparatus executes the delay feedback method is used to describe the delay feedback apparatus provided in the embodiments of the present application.

FIG. 4 is a schematic structural diagram of a delay feedback apparatus according to an embodiment of the present application. As shown in FIG. 4, an apparatus 400 mainly includes a first obtaining module 401 and a feedback module 402.

In this embodiment of the present application, the first obtaining module 401 is configured to obtain, based on a first reference signal, at least one target delay of at least one second reference signal relative to the first reference signal; and the feedback module 402 is used to feed back the at least one target delay to the network-side device.

In an optional implementation, the first obtaining module 401 is further configured to perform at least one of the following:

determining, according to a default rule or network signaling, the first reference signal used for obtaining the target delay; or
determining, according to a default rule or network signaling, a candidate reference signal set used for obtaining the target delay, and select the first reference signal from the candidate reference signal set; where the candidate reference signal set includes at least one reference signal, and the first reference signal is one reference signal among the at least one reference signal;

The feedback module 402 is further configured to feed back or indicate the first reference signal to the network-side device.

In an optional implementation, the target delay is associated with at least one of the following:

a target row of a predetermined table, where each row of the predetermined table is associated with at least one of the following: one delay range, one delay value, or one unit delay; or
K1 times a preset unit delay, where K1 is a rational number, and the preset unit delay is a fixed rational number or associated with a fixed rational number.

In an optional implementation, a size of the predetermined table or a maximum value of K1 is determined based on an indication in first higher-layer signaling.

In an optional implementation, the predetermined table is a table indicated by second higher-layer signaling among a plurality of tables, different tables among the plurality of tables are associated with different target information, where the target information includes at least one of the following: a unit delay, a maximum delay range, or a delay range.

In an optional implementation, the unit delay of the predetermined table is indicated by third higher-layer signaling.

In an optional implementation, the preset unit delay includes at least one of the following:

K2 times a first predetermined value, where K2 is a rational number;
C1 times a reciprocal of a bandwidth of the first reference signal, where C1 is a rational number;
C2 times a reciprocal of a bandwidth of the bandwidth part BWP associated with the first reference signal, where C2 is a rational number; or
K6 multiples of $\pi$, where K6 is a rational number.

In an optional implementation, the feeding back the at least one target delay to a network-side device includes one of the following:

for one target delay, a fed back bit sequence, where a specified bit of the bit sequence is a sign bit, and the remaining bits are used to indicate a magnitude of the target delay; and
remapping at least one target delay of the second reference signal relative to the first reference signal, and feeding back the remapped at least one target delay, where values of the remapped at least one target delay are all positive.

In an optional implementation, the remapping the at least one target delay includes:
using a sum of each target delay and a target value as the remapped target delay, where the target value includes one of the following: K4 times a cyclic prefix length or K3 times a preset unit delay, K4 and K3 being rational numbers greater than 0.

In an optional implementation, the obtaining, based on the first reference signal, at least one target delay of at least one second reference signal relative to the first reference signal includes:

obtaining at least one delay range configured by the network-side device based on the first reference signal; and
obtaining at least one target delay of the at least one second reference signal relative to the first reference signal within the at least one delay range.

In an optional implementation, one delay offset and one target delay range within the at least one delay range are associated with one target delay, and the delay offset is used to indicate an offset of the target delay relative to a starting position of the target delay range.

In an optional implementation, the obtaining, based on a first reference signal, at least one target delay of at least one second reference signal relative to the first reference signal includes:

obtaining a delay pattern configured by the network-side device based on the first reference signal; and

obtaining at least one target delay of the at least one second reference signal relative to the first reference signal based on the delay pattern.

In an optional implementation, one target delay is associated with one delay pattern and one delay offset, and the delay offset is used to indicate an offset of the target delay relative to a reference delay of the delay pattern.

In an optional implementation, the obtaining, based on a first reference signal, at least one target delay of at least one second reference signal relative to the first reference signal includes:

obtaining a candidate delay set configured by the network-side device, where the candidate delay set includes at least one candidate delay; and

obtaining at least one target delay of the at least one second reference signal relative to the first reference signal based on the candidate delay set, where the target delay is associated with one candidate delay in the candidate delay set.

In an optional implementation, the first obtaining module 401 is further configured to perform at least one of the following:

selecting the at least one second reference signal from a plurality of reference signals configured by the network-side device, where the at least one second reference signal is a part of the plurality of reference signals configured by the network-side device; or

determining the first reference signal from the plurality of reference signals configured by the network-side device, where the first reference signal is a part of the plurality of reference signals configured by the network-side device.

In an optional implementation, the selecting the at least one second reference signal from a plurality of reference signals configured by the network-side device includes:

selecting, based on an indication in at least one of fourth higher-layer signaling and fifth higher-layer signaling, the at least one second reference signal from the plurality of reference signals configured by the network-side device, where the fourth higher-layer signaling is used to indicate that the terminal feeds back target delays associated with a part of the plurality of reference signals, and the fifth higher-layer signaling is used to indicate the number of the at least one second reference signal.

In an optional implementation, the selecting the at least one second reference signal from a plurality of reference signals configured by the network-side device includes:

selecting from the plurality of reference signals the at least one second reference signal whose delay relative to the first reference signal is less than a preset first delay threshold.

In an optional implementation, the feedback module 402 is further configured to perform at least one of the following:

feeding back to the network-side device a reference signal indication, where the reference signal indication is used to indicate the at least one second reference signal;

feeding back to the network-side device the number of the at least one second reference signal; or

feeding back to the network-side device a first specific value for delays associated with unselected reference signals among the plurality of reference signals.

In an optional implementation, the first specific value is associated with one of the following: a protocol-specified value, a value out of range, or an invalid value.

In an optional implementation, the obtaining, based on the first reference signal, at least one target delay of at least one second reference signal relative to the first reference signal includes at least one of the following:

obtaining first quantity information configured or indicated by the network-side device, where the first quantity information includes at least one of the following: a maximum number $D1$ of target delays obtained for one second reference signal or a maximum number $D2$ of target delays obtained for the at least one second reference signal, $D1$ is a positive integer, and $D2$ is a positive integer; or

obtaining, based on the first reference signal, at least one of the following:

$D3$ target delays of one second reference signal relative to the first reference signal, where $D3$ is a positive integer, and $D3$ is less than or equal to $D1$; or

$D4$ target delays of the at least one second reference signal relative to the first reference signal, where $D4$ is a positive integer, and $D4$ is less than or equal to $D2$.

In an optional implementation, the obtaining, based on a first reference signal, at least one target delay of at least one second reference signal relative to the first reference signal includes at least one of the following:

obtaining second quantity information configured or indicated by the network-side device, where the second quantity information includes at least one of the following: the number D5 of target delays obtained for one second reference signal or the number D6 of target delays obtained for the at least one second reference signal, D5 is a positive integer, and D6 is a positive integer; or
obtaining, based on the first reference signal, at least one of the following:

D5 target delays of one second reference signal relative to the first reference signal, where D7 target delays in the D5 target delays are associated with a second specific value, D7 is an integer, and D7 is less than or equal to D5; or
D6 target delays of the at least one second reference signal relative to the first reference signal, where D8 target delays in the D6 target delays are associated with a second specific value, D8 is an integer, and D8 is less than or equal to D6.

In an optional implementation, the second specific value is associated with one of the following: a protocol-specified value, a value out of range, or an invalid value.

In an optional implementation, the feeding back to the network-side device the at least one target delay includes one of the following:

feeding back the at least one target delay separately; and
feeding back the at least one target delay together with a channel state information CSI report, where the CSI report includes at least one of the following: precoding matrix indicator PMI, channel quality indicator CQI, rank indicator RI, layer indicator LI, CSI-RS resource indicator CRI, layer 1 reference signal received power L1-RSRP, or layer 1 signal-to-noise and interference ratio L1-SINR.

In an optional implementation, when the at least one target delay is fed back together with the channel state information CSI report, the target delay is further associated with at least one of the following:

K5 times N3, where N3 is the number of PMI subbands, and K5 is a rational number;
K7 times the reciprocal of the bandwidth of the BWP associated with the CSI report, K7 being a rational number; or
a value within a predefined range.

In an optional implementation, the predefined range includes one of the following:

$$\{0, 1, 2 \dots, QN_3 - 1\};$$

or

$$\left\{0, \frac{1}{4}, \frac{1}{2} \dots, N_3 - \frac{1}{4}, N_3, N_3 + \frac{1}{4}, \dots, QN_3 - \frac{1}{4}\right\};$$

where Q is specified by a protocol or obtained through an indication in network higher-layer signaling.

The delay feedback apparatus in this embodiment of the present application may be an electronic device, such as an electronic device with an operating system, or a component in an electronic device, such as an integrated circuit or chip. The electronic device may be a terminal, or a device other than a terminal. By way of example, the terminal may include, but is not limited to, the types of the terminal 11 listed above, and the other device may be a server, a network attached storage (Network Attached Storage, NAS), or the like. This is not specifically limited in this embodiment of the present application.

The delay feedback apparatus provided in this embodiment of the present application can implement each process implemented by the method embodiments of FIG. 2, with the same technical effects achieved. To avoid repetition, details are not repeated here.

The method for obtaining a delay provided in the embodiments of the present application may be executed by an apparatus for obtaining a delay. In the embodiments of the present application, an example in which the apparatus for obtaining a delay executes the method for obtaining a delay is used to describe the apparatus for obtaining a delay provided in the embodiments of the present application is described.

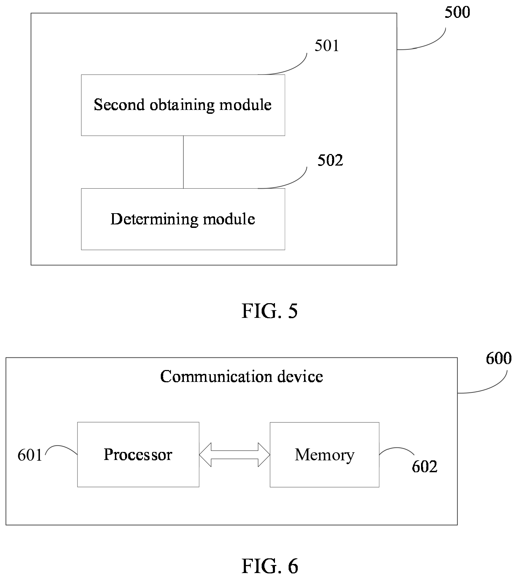

FIG. 5 is a schematic structural diagram of an apparatus for obtaining a delay according to an embodiment of the present application. As shown in FIG. 5, an apparatus mainly includes a second obtaining module 501 and a determining module 502.

In this embodiment of the present application, the second obtaining module 501 is configured to obtain at least one target delay fed back by the terminal, where the at least one target delay is used to indicate a delay of at least one second reference signal relative to a first reference signal; and the determining module 502 is configured to determine, based on the at least one target delay, a delay of each second reference signal relative to the first reference signal.

In an optional implementation, the apparatus further includes a first transmission module configured to perform at least one of the following:

sending first network signaling to the terminal, where the first network signaling is used to indicate the first reference signal used for obtaining the target delay;
sending second network signaling to the terminal, where the second network signaling is used to indicate a candidate reference signal set for obtaining the target delay, where the candidate reference signal set includes at least one reference signal, and the first reference signal is one reference signal among the at least one reference signal; or
obtaining the first reference signal fed back or indicated by the terminal.

In an optional implementation, the target delay is associated with at least one of the following:

a target row of a predetermined table, where each row of the predetermined table is associated with at least one of the following: one delay range, one delay value, or one unit delay; or
K1 times a preset unit delay, where K1 is a rational number, and the preset unit delay is a fixed rational number or associated with a fixed rational number.

In an optional implementation, the apparatus further includes a second transmission module configured to perform at least one of the following:

sending first higher-layer signaling to the terminal, where the first higher-layer signaling is used to indicate at least one of the following: a size of the predetermined table or a maximum value of K1;
sending second higher-layer signaling to the terminal, where the second higher-layer signaling is used to indicate that the predetermined table is a target table among a plurality of tables, different tables among the plurality of tables are associated with different target information, and the target information includes at least one of the following: a unit delay, a maximum delay range, or a delay range; or
sending third higher-layer signaling to the terminal, where the third higher-layer signaling is used to indicate the unit delay of the predetermined table.

In an optional implementation, the obtaining at least one target delay fed back by a terminal includes one of the following:

receiving at least one bit sequence fed back by the terminal, determining a sign of the target delay corresponding to the bit sequence based on a value of a specified bit of the bit sequence, and determining a magnitude of the target delay corresponding to the bit sequence based on values of the remaining bits of the bit sequence; and
receiving at least one target delay fed back by the terminal, and remapping the received at least one target delay to obtain remapped at least one target delay.

In an optional implementation, the remapping the received at least one target delay includes:
taking a difference between each received target delay and a target value as the remapped target delay, where the target value includes one of the following: K4 times a cyclic prefix length or K3 times a preset unit delay, K4 and K3 being rational numbers greater than 0.

In an optional implementation, the apparatus further includes a first configuration module configured to perform at least one of the following:

configuring at least one delay range for the terminal based on the first reference signal, where one target delay is associated with one delay offset and one target delay range within the at least one delay range, and the delay offset is used to indicate an offset of the target delay relative to a starting position of the target delay range;
configuring a delay pattern for the terminal based on the first reference signal, where one target delay is associated with one delay pattern and one delay offset, and the delay offset is used to indicate an offset of the target delay relative to a reference delay of the delay pattern; or
configuring a candidate delay set for the terminal, where the candidate delay set includes at least one candidate delay, and the target delay is associated with one candidate delay in the candidate delay set.

In an optional implementation, the apparatus further includes a second configuration module configured to configure a plurality of reference signals for the terminal, where the at least one second reference signal is a part of the plurality of reference signals, or the first reference signal is a part of the plurality of reference signals.

In an optional implementation, the second configuration module is further configured to:

send at least one of fourth higher-layer signaling and fifth higher-layer signaling to the terminal, where the fourth higher-layer signaling is used to indicate that the terminal feeds back target delays associated with a part of the plurality of reference signals, and the fifth higher-layer signaling is used to indicate the number of the at least one second reference signal.

In an optional implementation, the apparatus further includes a third transmission module configured to perform at least one of the following:

receiving a reference signal indication sent by the terminal, where the reference signal indication is used to indicate the at least one second reference signal;

receiving the number of the at least one second reference signal fed back by the terminal; or

receiving a specific value fed back by the terminal for at least one target delay associated with the unselected reference signals among the plurality of reference signals.

In an optional implementation, the apparatus further includes a third configuration module configured to perform at least one of the following:

configuring for the terminal or indicating to the terminal first quantity information, where the first quantity information includes at least one of the following: a maximum number D1 of target delays obtained for one second reference signal or a maximum number D2 of target delays obtained for the at least one second reference signal, D1 is a positive integer, and D2 is a positive integer; or

configuring for the terminal or indicating to the terminal second quantity information to the terminal, where the second quantity information includes at least one of the following: the number D5 of target delays obtained for one second reference signal or the number D6 of target delays obtained for the at least one second reference signal, D5 is a positive integer, and D6 is a positive integer.

In an optional implementation, the obtaining at least one target delay fed back by the terminal includes one of the following:

obtaining the at least one target delay separately fed back by the terminal; and

obtaining the at least one target delay fed back by the terminal together with a CSI report, where the CSI report includes at least one of the following: precoding matrix indicator PMI, channel quality indicator CQI, rank indicator RI, layer indicator LI, CSI-RS resource indicator CRI, layer 1 reference signal received power L1-RSRP, or layer 1 signal-to-noise and interference ratio L1-SINR.

The apparatus for obtaining a delay in this embodiment of the present application may be an electronic device, such as an electronic device with an operating system, or a component in an electronic device, such as an integrated circuit or chip. The electronic device can be a network-side device. By way of example, the network-side device may include, but is not limited to, the types of network-side device 12 listed above. This is not specifically limited in this embodiment of the present application.

The apparatus for obtaining a delay provided in this embodiment of the present application can implement each process implemented by the method embodiments of FIG. 3, with the same technical effects achieved. To avoid repetition, details are not repeated here.

As shown in FIG. 6, an embodiment of the present application further provides a communication device 600, including a processor 601 and a memory 602, where a program or instruction capable of running on the processor 601 is stored on the memory 602. For example, when the communication device 600 is a terminal, the program or instruction is executed by the processor 601 to implement the steps of the above embodiment of the delay feedback method, with the same technical effects achieved. When the communication device 600 is a network-side device, the program or instruction is executed by the processor 601 to implement the steps of the above embodiment of the method for obtaining a delay, with the same technical effects achieved. To avoid repetition, details are not repeated here.

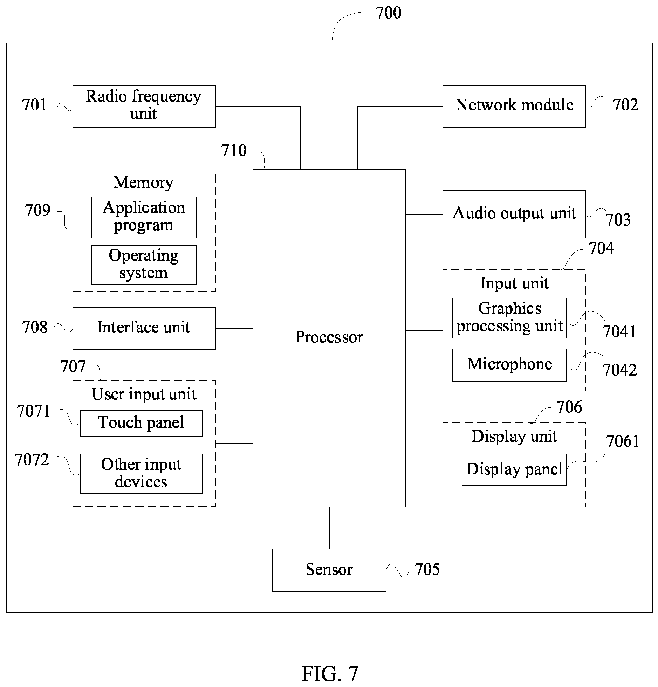

An embodiment of the present application further provides a terminal, including a processor and a communication interface, where the communication interface is coupled with the processor, and the processor is used to run a program or instruction to implement the steps of the method embodiment as shown in FIG. 2. This terminal embodiment corresponds to the above terminal side method embodiment. All process and implementations in the above method embodiment are applicable to this terminal embodiment, with the same technical effect achieved. Specifically, FIG. 7 is a schematic diagram of the hardware structure of a terminal implementing the embodiments of the present application.

The terminal 700 includes, but is not limited to, at least a part of components such as a radio frequency unit 701, a network module 702, an audio output unit 703, an input unit 704, a sensor 705, a display unit 706, a user input unit 707, an interface unit 708, a memory 709, and a processor 710.

Those skilled in the art can understand that the terminal 700 may further include a power supply (such as a battery) for supplying power to various components, and the power supply may be logically connected to the processor 710 through a power management system, so that functions such as charge and discharge management and power consumption management are implemented by using the power management system. The structure of the terminal shown in FIG. 7 does not constitute any limitation on the terminal, and the terminal may include more or fewer components than shown, or combine some components, or have different component arrangements. Details are not described here.

It should be understood that in this embodiment of the present application, the input unit 704 may include a graphics processing unit (Graphics Processing Unit, GPU) 7041 and a microphone 7042, and the graphics processing unit 7041 processes image data of static pictures or videos obtained by an image capture device (such as a camera) in a video capture mode or an image capture mode. The display unit 706 may include a display panel 7061, and the display panel 7061 may be configured in the form of a liquid crystal display, an organic light-emitting diode, or the like. The user input unit 707 includes at least one of a touch panel 7071 and other input devices 7072. The touch panel 7071 is also referred to as a touch screen. The touch panel 7071 may include two parts: a touch detection device and a touch controller. The other input devices 7072 may include, but are not limited to, a physical keyboard, a function button (for example, a volume control button or a power button), a trackball, a mouse, and a joystick. Details are not described here.

In this embodiment of the present application, the radio frequency unit 701 receives downlink data from a network-side device and transmits the data to the processor 710 for processing; and the radio frequency unit 701 can additionally send uplink data to the network-side device. Generally, the radio frequency unit 701 includes, but is not limited to, an antenna, an amplifier, a transceiver, a coupler, a low noise amplifier, and a duplexer.

The memory 709 may be configured to store a software program or instruction and various data. The memory 709 may mainly include a first storage area for storing a program or an instruction and a second storage area for storing data, where the first storage area may store an operating system, an application program. or an instruction required for at least one function (such as a sound playback function or an image playback function), and the like. In addition, the memory 709 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in this embodiment of the present application includes, but is not limited to, these and any other suitable types of memory.

The processor 710 may include one or more processing units. Optionally, the processor 710 integrates an application processor and a modem processor. The application processor primarily processes operations involving an operating system, a user interface, an application program, or the like. The modem processor primarily processes radio communication signals, for example, being a baseband processor. It can be understood that the above modem processor may not be integrated into the processor 710.

The processor 710 is configured to obtain, based on a first reference signal, at least one target delay of at least one second reference signal relative to the first reference signal;

The radio frequency unit 701 is configured to feed back the at least one target delay to a network-side device.

It can be understood that for the implementation process of the implementations mentioned in this embodiment, reference may be made to the related description in the method embodiment 200, with the same or corresponding technical effects achieved. To avoid repetition, details are not repeated here.

An embodiment of the present application further provides a network-side device including a processor and a communication interface, where the communication interface is coupled to the processor, and the processor is configured to run a program or an instruction to implement the steps of the method embodiment as shown in FIG. 3. This network-side device embodiment corresponds to the above network-side device method embodiment. All processes and implementations in the above method embodiment are applicable to this network-side device embodiment, with the same technical effect achieved.

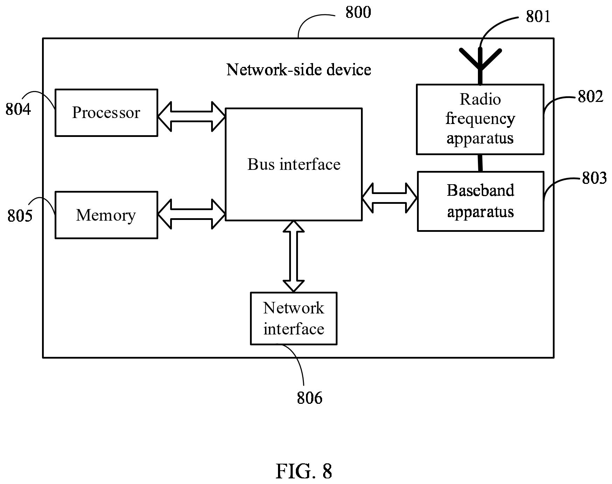

Specifically, an embodiment of the present application further provides a network-side device. As shown in FIG. 8, the network-side device 800 includes an antenna 801, a radio frequency apparatus 802, a baseband apparatus 803, a processor 804, and a memory 805. The antenna 801 is connected to the radio frequency apparatus 802. In the uplink direction, the radio frequency apparatus 802 receives information through the antenna 801 and sends the received information to the baseband apparatus 803 for processing. In the downlink direction, the baseband apparatus 803 processes the information to be sent and sends it to the radio frequency apparatus 802, and the radio frequency apparatus 802 processes the received information and sends it out through the antenna 801.

The method executed by the network-side device in the above embodiment may be implemented in the baseband apparatus 803, and the baseband apparatus 803 includes a baseband processor.

The baseband apparatus 803, for example, may include at least one baseband board, where a plurality of chips are disposed on the baseband board. As shown in FIG. 8, one of the chips, for example, is a baseband processor, connected to the memory 805 through a bus interface to invoke the programs in the memory 805 to execute the operations of the network device shown in the above method embodiment.

The network-side device can further include a network interface 806, where the interface is, for example, a common public radio interface (Common Public Radio Interface, CPRI).

Specifically, the network-side device 800 in this embodiment of the present application further includes: an instruction or a program stored on the memory 805 and capable of running on the processor 804. The processor 804 invokes the instruction or program in the memory 805 to execute the method executed by the modules shown in FIG. 5, with the same technical effects achieved. To avoid repetition, details are not repeated here.

An embodiment of the present application further provides a readable storage medium where a program or an instruction is stored, and when the program or instruction is executed by a processor, the processes of the above embodiments of the delay feedback method are implemented, or the processes of the above embodiments of the method for obtaining a delay are implemented, with the same technical effects achieved. To avoid repetition, details are not repeated here.

The processor is a processor in the terminal described in the above embodiment. The readable storage medium includes a computer-readable storage medium such as a computer read-only memory ROM, a random access memory RAM, a magnetic disk, or an optical disc. In some examples, the readable storage medium may be a non-transitory readable storage medium.

The processor mentioned in the embodiments of the present application may include a general-purpose processor, a special-purpose processor, or the like, for example, including a central processing unit (Central Processing Unit, CPU), a microprocessor, a digital signal processor (Digital Signal Processor, DSP), an artificial intelligence (Artificial Intelligence, AI) processor, a graphics processing unit (Graphics Processing Unit, GPU), an application specific integrated circuit (Application Specific Integrated Circuit, ASIC), a network processor (Network Processor, NP), a field programmable gate array (Field Programmable Gate Array, FPGA), or any other programmable logic device, a gate circuit, a transistor, or a discrete hardware component.

An embodiment of the present application further provides a chip, where the chip includes a processor and a communication interface, the communication interface is coupled to the processor, and the processor is configured to run a program or an instruction to implement the processes of the above embodiment of the delay feedback method, or implement the processes of the above embodiment of the method for obtaining a delay, with the same technical effects achieved. To avoid repetition, details are not repeated here.

It should be understood that the chip mentioned in this embodiment of the present application may alternatively be referred to as a system-level chip, a system chip, a chip system or a system on chip.

An embodiment of the present application further provides a computer program/program product, where the computer program/program product is stored in a storage medium, and the computer program/program product is executed by at least one processor to implement the processes of the above embodiment of the delay feedback method, or implement the processes of the above embodiment of the method for obtaining a delay, with the same technical effects achieved. To avoid repetition, details are not repeated here.

An embodiment of the present application further provides a delay feedback system including a terminal and a network-side device, where the terminal may be configured to execute the steps of the delay feedback method as described above, and the network-side device may be configured to execute the steps of the method for obtaining a delay as described above.

It should be noted that in this document, the terms "include", "comprise" or any other variants thereof are intended to cover non-exclusive inclusion, so that a process, method, article or device including a series of elements not only includes those elements, but also includes other elements not explicitly listed, or also includes elements inherent to such process, method, article, or apparatus. Without more restrictions, an element defined by the statement "including one..." does not exclude the existence of another identical element in the process, method, article, or apparatus including the element. In addition, it should be pointed out that the scope of the methods and apparatuses in the embodiments of the present application is not limited to performing functions in the order shown or discussed, but can also include performing functions in a substantially simultaneous manner or in a reverse order, depending on the functions involved. For example, the described methods may be performed in an order different from the described order, and steps may be added, omitted or combined. In addition, features described with reference to certain examples may be combined in other examples.

Through the description of the above embodiments, those skilled in the art can clearly understand that the above embodiment methods may be implemented by a computer software product plus a necessary universal hardware platform, or by hardware. The computer software product is stored in a storage medium (such as ROM, RAM, magnetic disk, or optical disk), including several instructions to make a terminal or network-side device execute the methods described in the embodiments of the present application.

The embodiments of the present application have been described above with reference to the accompanying drawings, but the present application is not limited to the above specific implementations. The above specific implementations are merely illustrative and not restrictive. Under the enlightenment of the present application, those of ordinary skill in the art can make many forms of implementations without departing from the purpose of the present application and the scope protected by the claims, and these implementations all fall within the protection of the present application.

**Claims**

1.  A delay feedback method, comprising:

    obtaining, by a terminal based on a first reference signal, at least one target delay of at least one second reference signal relative to the first reference signal; and
    feeding back, by the terminal, the at least one target delay to a network-side device.

2.  The method according to claim 1, wherein before the obtaining, by a terminal based on a first reference signal, at least one target delay of at least one second reference signal relative to the first reference signal, the method further comprises at least one of the following:

    determining, by the terminal according to a default rule or network signaling, the first reference signal used for obtaining the target delay;
    determining, by the terminal according to a default rule or network signaling, a candidate reference signal set used for obtaining the target delay, and selecting the first reference signal from the candidate reference signal set; wherein the candidate reference signal set comprises at least one reference signal, and the first reference signal is one reference signal among the at least one reference signal; or
    feeding back or indicating, by the terminal, the first reference signal to the network-side device.

3.  The method according to claim 1, wherein the target delay is associated with at least one of the following:

    a target row of a predetermined table, wherein each row of the predetermined table is associated with at least one of the following: one delay range, one delay value, or one unit delay; or
    K1 times a preset unit delay, wherein K1 is a rational number, and the preset unit delay is a fixed rational number or associated with a fixed rational number.

4.  The method according to claim 1, wherein the target delay is associated with at least one of the following:
    one delay range, one delay value, or one unit delay.

5.  The method according to claim 3 or 4, wherein a size of the predetermined table, or a maximum value of K1, or a size of the one delay range, or the number of the delay ranges is determined based on an indication in first higher-layer signaling.

6.  The method according to claim 3, wherein the predetermined table is a table indicated by second higher-layer signaling among a plurality of tables, different tables among the plurality of tables are associated with different target information, and the target information comprises at least one of the following: a unit delay, a maximum delay range, or a delay range.

7.  The method according to claim 3, wherein the unit delay of the predetermined table is indicated by third higher-layer signaling.

8.  The method according to claim 3, wherein the preset unit delay comprises at least one of the following:

    K2 times a first predetermined value, wherein K2 is a rational number;
    C1 times a reciprocal of a bandwidth of the first reference signal, wherein C1 is a rational number;
    C2 times a reciprocal of a bandwidth of the bandwidth part BWP associated with the first reference signal, wherein C2 is a rational number; or
K6 multiples of $\pi$, wherein K6 is a rational number.

9. The method according to any one of claims 1 to 4, wherein the feeding back, by the terminal, the at least one target delay to a network-side device comprises one of the following:

for one target delay, one bit sequence fed back by the terminal, wherein a specified bit of the bit sequence is a sign bit, and the remaining bits are used to indicate a magnitude of the target delay; and
remapping, by the terminal, at least one target delay of the second reference signal relative to the first reference signal, and feeding back the remapped at least one target delay, wherein values of the remapped at least one target delay are all positive.

10. The method according to claim 9, wherein the remapping, by the terminal, the at least one target delay comprises: using, by the terminal, a sum of each target delay and a target value as a the remapped target delay, wherein the target value comprises one of the following: K4 times a cyclic prefix length or K3 times a preset unit delay, K4 and K3 being rational numbers greater than 0.

11. The method according to claim 1, wherein the obtaining, by a terminal based on a first reference signal, at least one target delay of at least one second reference signal relative to the first reference signal comprises:

obtaining, by the terminal, at least one delay range configured by the network-side device based on the first reference signal; and
obtaining, by the terminal, the at least one target delay of the at least one second reference signal relative to the first reference signal within the at least one delay range.

12. The method according to claim 11, wherein one delay offset and one target delay range within the at least one delay range are associated with one target delay, and the delay offset is used to indicate an offset of the target delay relative to a starting position of the target delay range.

13. The method according to claim 1, wherein the obtaining, by a terminal based on a first reference signal, at least one target delay of at least one second reference signal relative to the first reference signal comprises:

obtaining, by the terminal, a delay pattern configured by the network-side device based on the first reference signal; and
obtaining, by the terminal based on the delay pattern, at least one target delay of the at least one second reference signal relative to the first reference signal.

14. The method according to claim 13, wherein one target delay is associated with one delay pattern and one delay offset, and the delay offset is used to indicate an offset of the target delay relative to a reference delay of the delay pattern.

15. The method according to claim 1, wherein the obtaining, by a terminal based on a first reference signal, at least one target delay of at least one second reference signal relative to the first reference signal comprises:

obtaining, by the terminal, a candidate delay set configured by the network-side device, wherein the candidate delay set comprises at least one candidate delay; and
obtaining, by the terminal based on the candidate delay set, at least one target delay of the at least one second reference signal relative to the first reference signal, wherein the target delay is associated with one candidate delay in the candidate delay set.

16. The method according to any one of claims 1 to 15, wherein before the obtaining, by a terminal based on a first reference signal, at least one target delay of at least one second reference signal relative to the first reference signal, the method further comprises at least one of the following:

selecting, by the terminal, the at least one second reference signal from a plurality of reference signals configured by the network-side device, wherein the at least one second reference signal is a part of the plurality of reference signals configured by the network-side device; and
determining, by the terminal, the first reference signal from the plurality of reference signals configured by the network-side device, wherein the first reference signal is a part of the plurality of reference signals configured by the network-side device.

17. The method according to claim 16, wherein the selecting, by the terminal, the at least one second reference signal from a plurality of reference signals configured by the network-side device comprises:
selecting, by the terminal from the plurality of reference signals configured by the network-side device, the at least one second reference signal based on an indication in at least one of fourth higher-layer signaling and fifth higher-layer signaling, wherein the fourth higher-layer signaling is used to indicate that the terminal feeds back target delays associated with a part of the plurality of reference signals, and the fifth higher-layer signaling is used to indicate the number of the at least one second reference signal.

18. The method according to claim 16 or 17, wherein the selecting, by the terminal, the at least one second reference signal from a plurality of reference signals configured by the network-side device comprises:
selecting, by the terminal from the plurality of reference signals, the at least one second reference signal whose delay relative to the first reference signal is less than a preset first delay threshold.

19. The method according to any one of claims 16 to 18, wherein after the selecting, by the terminal, the at least one second reference signal from a plurality of reference signals configured by the network-side device, the method further comprises at least one of the following:

feeding back, by the terminal, a reference signal indication to the network-side device, wherein the reference signal indication is used to indicate the at least one second reference signal;
feeding back, by the terminal, the number of the at least one second reference signal to the network-side device; or
feeding back, by the terminal to the network-side device, a first specific value for delays associated with unselected reference signals among the plurality of reference signals.

20. The method according to claim 16, wherein the feeding back, by the terminal, the at least one target delay to a network-side device comprises:
feeding back, by the terminal to the network-side device, a first specific value for a second reference signal whose delay relative to the first reference signal is greater than a preset first delay threshold among the plurality of second reference signals configured by the network-side device.

21. The method according to claim 19 or 20, wherein, the first specific value is associated with one of the following: a protocol-specified value, a value out of range, or an invalid value.

22. The method according to claim 1, wherein the obtaining, by a terminal based on a first reference signal, at least one target delay of at least one second reference signal relative to the first reference signal comprises:

obtaining, by the terminal, first quantity information configured or indicated by the network-side device, wherein the first quantity information comprises at least one of the following: a maximum number D1 of target delays obtained for one second reference signal or a maximum number D2 of target delays obtained for the at least one second reference signal, D1 is a positive integer, and D2 is a positive integer; and
obtaining, by the terminal based on the first reference signal, at least one of the following:

D3 target delays of one second reference signal relative to the first reference signal, wherein D3 is a positive integer, and D3 is less than or equal to D1; or
D4 target delays of the at least one second reference signal relative to the first reference signal, wherein D4 is a positive integer, and D4 is less than or equal to D2.

23. The method according to claim 1, wherein the obtaining, by a terminal based on a first reference signal, at least one target delay of at least one second reference signal relative to the first reference signal comprises:

obtaining, by the terminal, second quantity information configured or indicated by the network-side device, wherein the second quantity information comprises at least one of the following: the number D5 of target delays obtained for one second reference signal or the number D6 of target delays obtained for the at least one second reference signal, D5 is a positive integer, and D6 is a positive integer; and
obtaining, by the terminal based on the first reference signal, at least one of the following:

D5 target delays of one second reference signal relative to the first reference signal, wherein D7 target delays in the D5 target delays are associated with a second specific value, D7 is an integer, and D7 is less than or equal to D5; or

D6 target delays of the at least one second reference signal relative to the first reference signal, wherein D8 target delays in the D6 target delays are associated with a second specific value, D8 is an integer, and D8 is less than or equal to D6.

24. The method according to claim 23, wherein the second specific value is associated with one of the following: a protocol-specified value, a value out of range, or an invalid value.

25. The method according to any one of claims 1 to 24, wherein the feeding back, by the terminal, the at least one target delay to a network-side device comprises one of the following:

feeding back, by the terminal, the at least one target delay separately; and

feeding back, by the terminal, the at least one target delay together with a channel state information CSI report, wherein the CSI report comprises at least one of the following: precoding matrix indicator PMI, channel quality indicator CQI, rank indicator RI, layer indicator LI, CSI-RS resource indicator CRI, layer 1 reference signal received power L1-RSRP, or layer 1 signal-to-noise and interference ratio L1-SINR.

26. The method according to claim 25, wherein when the at least one target delay is fed back together with the channel state information CSI report, the target delay is further associated with at least one of the following:

K5 times N3, wherein N3 is the number of PMI subbands, and K5 is a rational number;

K7 times the reciprocal of the bandwidth of the BWP associated with the CSI report, K7 being a rational number; or

a value within a predefined range.

27. The method according to claim 26, wherein the predefined range comprises one of the following:

$$\{0,1,2 \dots, QN_3 - 1\};$$

or

$$\left\{0, \frac{1}{4}, \frac{1}{2} \dots, N_3 - \frac{1}{4}, N_3, N_3 + \frac{1}{4}, \dots, QN_3 - \frac{1}{4}\right\};$$

wherein

Q is specified by a protocol or obtained through an indication in network higher-layer signaling.

28. The method according to claim 1, wherein the feeding back, by the terminal, the at least one target delay to a network-side device comprises: for one target delay, feeding back, by the terminal, one bit sequence.

29. The method according to any one of claims 1 to 28, wherein the method further comprises:
determining, by the terminal, an indication range of the target delay based on a bit width of one bit sequence indicated by the network-side device.

30. The method according to any one of claims 1 to 29, wherein one of the target delays is associated with one delay range within a plurality of delay ranges, a plurality of target delays are associated with the plurality of delay ranges, and the plurality of delay ranges are configured by the network-side device.

31. The method according to claim 1, wherein the first reference signal comprises at least one of the following: a CSI reference signal CSI-RS, a tracking reference signal TRS, a CSI-RS set, or a TRS set.

32. A method for obtaining a delay, comprising:
obtaining, by a network-side device, at least one target delay fed back by a terminal, wherein the at least one target delay is used to indicate a delay of at least one second reference signal relative to a first reference signal.

33. The method according to claim 32, wherein, before the obtaining, by a network-side device, at least one target delay fed back by a terminal, the method further comprises at least one of the following:

sending, by the network-side device, first network signaling to the terminal, wherein the first network signaling is used to indicate the first reference signal used for obtaining the target delay;

sending, by the network-side device, second network signaling to the terminal, wherein the second network signaling is used to indicate a candidate reference signal set for obtaining the target delay, wherein the candidate reference signal set comprises at least one reference signal, and the first reference signal is one reference signal among the at least one reference signal; or

obtaining, by the network-side device, the first reference signal fed back or indicated by the terminal.

34. The method according to claim 32, wherein the target delay is associated with at least one of the following:

a target row of a predetermined table, wherein each row of the predetermined table is associated with at least one of the following: one delay range, one delay value, or one unit delay; or

K1 times a preset unit delay, wherein K1 is a rational number, and the preset unit delay is a fixed rational number or associated with a fixed rational number.

35. The method according to claim 34, wherein the target delay is associated with at least one of the following: one delay range, one delay value, or one unit delay.

36. The method according to claim 34 or 35, wherein, before the obtaining, by a network-side device, at least one target delay fed back by a terminal, the method further comprises at least one of the following:

sending, by the network-side device, first higher-layer signaling to the terminal, wherein the first higher-layer signaling is used to indicate at least one of the following: a size of the predetermined table, a maximum value of the K1, or the one delay range;

sending, by the network-side device, second higher-layer signaling to the terminal, wherein the second higher-layer signaling is used to indicate that the predetermined table is a target table among a plurality of tables, different tables among the plurality of tables are associated with different target information, and the target information comprises at least one of the following: a unit delay, a maximum delay range, or a delay range; or

sending, by the network-side device, third higher-layer signaling to the terminal, wherein the third higher-layer signaling is used to indicate the unit delay of the predetermined table.

37. The method according to any one of claims 32 to 36, wherein the obtaining, by a network-side device, at least one target delay fed back by a terminal comprises one of the following:

receiving, by the network-side device, at least one bit sequence fed back by the terminal, determining a sign of the target delay corresponding to the bit sequence based on a value of a specified bit of the bit sequence, and determining a magnitude of the target delay corresponding to the bit sequence based on values of the remaining bits of the bit sequence; and

receiving, by the network-side device, at least one target delay fed back by the terminal, and remapping the received at least one target delay to obtain remapped at least one target delay.

38. The method according to claim 37, wherein the remapping the received at least one target delay comprises: taking a difference between each received target delay and a target value as the remapped target delay, wherein the target value comprises one of the following: K4 times a cyclic prefix length or K3 times a preset unit delay, K4 and K3 being rational numbers greater than 0.

39. The method according to claim 32, wherein before the obtaining, by a network-side device, at least one target delay fed back by a terminal, the method further comprises at least one of the following:

configuring, by the network-side device for the terminal, at least one delay range based on the first reference signal, wherein one target delay is associated with one delay offset and one target delay range within the at least one delay range, and the delay offset is used to indicate an offset of the target delay relative to a starting position of the target delay range;

configuring, by the network-side device for the terminal, a delay pattern based on the first reference signal, wherein one target delay is associated with one delay pattern and one delay offset, and the delay offset is used to indicate an offset of the target delay relative to a reference delay of the delay pattern; or

configuring, by the network-side device for the terminal, a candidate delay set, wherein the candidate delay set comprises at least one candidate delay, and the target delay is associated with one candidate delay in the candidate delay set.

40. The method according to any one of claims 32 to 39, wherein before the obtaining, by a network-side device, at least one target delay fed back by a terminal, the method further comprises:
configuring, by the network-side device for the terminal, a plurality of reference signals, wherein the at least one second reference signal is a part of the plurality of reference signals, or the first reference signal is a part of the plurality of reference signals.

41. The method according to claim 40, wherein, before the obtaining, by a network-side device, at least one target delay fed back by a terminal, the method further comprises:
sending, by the network-side device to the terminal, at least one of fourth higher-layer signaling and fifth higher-layer signaling, wherein the fourth higher-layer signaling is used to indicate that the terminal feeds back target delays associated with a part of the plurality of reference signals, and the fifth higher-layer signaling is used to indicate the number of the at least one second reference signal.

42. The method according to claim 40 or 41, wherein after the configuring, by the network-side device for the terminal, a plurality of reference signals, the method further comprises at least one of the following:

receiving, by the network-side device, a reference signal indication sent by the terminal, wherein the reference signal indication is used to indicate the at least one second reference signal;
receiving, by the network-side device, the number of the at least one second reference signal fed back by the terminal; or
receiving, by the network-side device, a specific value fed back by the terminal for at least one target delay associated with unselected reference signals among the plurality of reference signals.

43. The method according to claim 32, wherein before the obtaining, by a network-side device, at least one target delay fed back by a terminal, the method further comprises at least one of the following:

configuring, by the network-side device for the terminal, or indicating, by the network-side device to the terminal, first quantity information, wherein the first quantity information comprises at least one of the following: a maximum number D1 of target delays obtained for one second reference signal or a maximum number D2 of target delays obtained for the at least one second reference signal, D1 is a positive integer, and D2 is a positive integer; or
configuring, by the network-side device for the terminal, or indicating, by the network-side device to the terminal, second quantity information, wherein the second quantity information comprises at least one of the following: the number D5 of target delays obtained for one second reference signal or the number D6 of target delays obtained for the at least one second reference signal, D5 is a positive integer, and D6 is a positive integer.

44. The method according to any one of claims 32 to 43, wherein the obtaining, by a network-side device, at least one target delay fed back by a terminal comprises one of the following:

obtaining, by the network-side device, the at least one target delay separately fed back by the terminal; and
obtaining, by the network-side device, the at least one target delay fed back by the terminal together with a CSI report, wherein the CSI report comprises at least one of the following: precoding matrix indicator PMI, channel quality indicator CQI, rank indicator RI, layer indicator LI, CSI-RS resource indicator CRI, layer 1 reference signal received power L1-RSRP, or layer 1 signal-to-noise and interference ratio L1-SINR.

45. The method according to any one of claims 32 to 44, wherein the obtaining, by a network-side device, at least one target delay fed back by a terminal comprises: for one target delay, obtaining, by the network-side device, one bit sequence.

46. The method according to any one of claims 32 to 45, wherein the method further comprises: indicating, by the network-side device to the terminal, a bit width of one bit sequence, wherein the bit width is used to determine an indication range of the target delay.

47. The method according to any one of claims 32 to 46, wherein the method further comprises: configuring, by the network-side device, a plurality of delay ranges, wherein one target delay is associated with one delay range, and a plurality of target delays are associated with a plurality of delay ranges.

48. The method according to claim 32, wherein the first reference signal comprises at least one of the following: a CSI reference signal CSI-RS, a tracking reference signal TRS, a CSI-RS set, or a TRS set.

49. A frequency offset feedback method, comprising:

obtaining, by a terminal based on a first reference signal, at least one target frequency offset of at least one second reference signal relative to the first reference signal; and
feeding back, by the terminal, the at least one target frequency offset to a network-side device.

50. The method according to claim 49, wherein the target frequency offset is associated with F1 times a preset unit frequency offset, F1 being a rational number.

51. The method according to any one of claims 49 to 50, wherein the feeding back, by the terminal to a network-side device, the at least one target frequency offset comprises: for a part of the target frequency offsets, feeding back, by the terminal, a specific value to the network-side device.

52. The method according to claim 51, wherein the specific value is associated with an invalid value or a protocol-specified value or a value out of range.

53. A method for obtaining a frequency offset, comprising:
obtaining, by a network-side device, at least one target frequency offset fed back by a terminal, wherein the at least one target frequency offset is used to indicate a frequency offset of at least one second reference signal relative to a first reference signal.

54. The method according to claim 53, wherein before the obtaining, by a network-side device, at least one target frequency offset fed back by a terminal, the method further comprises:
configuring, by the network-side device for the terminal, a plurality of reference signals, wherein the at least one second reference signal is a part of the plurality of reference signals, or the first reference signal is a part of the plurality of reference signals.

55. The method according to claim 54, wherein the obtaining, by a network-side device, at least one target frequency offset fed back by a terminal comprises:
receiving, by the network-side device, a specific value fed back by the terminal to the network-side device for a part of the target frequency offsets.

56. The method according to claim 55, wherein the specific value is associated with an invalid value or a protocol-specified value or a value out of range.

57. The method according to claim 53, wherein the method further comprises: configuring, by the network-side device, a candidate value or a candidate value set of the target frequency offset.

58. A delay feedback apparatus, comprising:

a first obtaining module, configured to obtain, based on a first reference signal, at least one target delay of at least one second reference signal relative to the first reference signal; and
a feedback module, configured to feed back the at least one target delay to a network-side device.

59. An apparatus for obtaining a delay, comprising:

a second obtaining module, configured to obtain at least one target delay fed back by a terminal, wherein the at least one target delay is used to indicate a delay of at least one second reference signal relative to a first reference signal; and
a determining module, configured to determine, based on the at least one target delay, a delay of each second reference signal relative to the first reference signal.

60. A terminal, comprising a processor and a memory, wherein the memory is configured to store a program or instruction capable of running on the processor, and when the program or instruction is executed by the processor, the steps of the delay feedback method according to any one of claims 1 to 31 are implemented, or the steps of the frequency offset feedback method according to any one of claims 49 to 52 are implemented.

61. A network-side device, comprising a processor and a memory, the memory is configured to store a program or instruction capable of running on the processor, and when the program or instruction is executed by the processor, the steps of the method for obtaining a delay according to any one of claims 32 to 48 are implemented, or the steps of the method for obtaining a frequency offset according to any one of claims 53 to 57 are implemented.

62. A readable storage medium, wherein a program or instruction is stored on the readable storage medium, and when the program or instruction is executed by a processor, the steps of the delay feedback method according to any one of claims 1 to 31 are implemented, or the steps of the method for obtaining a delay according to any one of claims 32 to 48 are implemented, or the steps of the frequency offset feedback method according to any one of claims 49 to 52 are implemented, or the steps of the method for obtaining a frequency offset according to any one of claims 53 to 57 are implemented.

12

Network-side
device

11

11

Terminal

Terminal

FIG. 1

<u>200</u>

S210

A terminal obtains, based on a first reference signal, at least one target delay of at least one second reference signal relative to the first reference signal

S212

The terminal feeds back the at least one target delay to a network-side device

FIG. 2

300                                                                                    S310

A network-side device obtains at least one target delay fed back by a terminal, where the at least one target delay is used to indicate a delay of at least one second reference signal relative to a first reference signal

FIG. 3

400

401

First obtaining module

402

Feedback module

FIG. 4

500

501

Second obtaining module

502

Determining module

FIG. 5

600

Communication device

601

Processor

Memory

602

FIG. 6

700

701 — Radio frequency unit

Network module — 702

710

709 — Memory
Application program
Operating system

Audio output unit — 703

704
Input unit
Graphics processing unit — 7041
Microphone — 7042

708 — Interface unit

707
User input unit
7071 — Touch panel
7072 — Other input devices

Processor

706
Display unit
Display panel — 7061

Sensor — 705

FIG. 7

800

801

Network-side device

804 — Processor

805 — Memory

Bus interface

Radio frequency apparatus — 802

Baseband apparatus — 803

Network interface

806

FIG. 8

## INTERNATIONAL SEARCH REPORT

| International application No. |
| --- |
| **PCT/CN2024/116500** |

| A. | CLASSIFICATION OF SUBJECT MATTER |
| --- | --- |
| | H04L 5/00(2006.01)i |

According to International Patent Classification (IPC) or to both national classification and IPC

| B. | FIELDS SEARCHED |
| --- | --- |

Minimum documentation searched (classification system followed by classification symbols)

    IPC:H04L H04W

Documentation searched other than minimum documentation to the extent that such documents are included in the fields searched

Electronic data base consulted during the international search (name of data base and, where practicable, search terms used)

    3GPP, CNTXT, ENTXT, DWPI, IEEE: 参考信号, 频偏, 频移, 时延, 第二, 范围, 带宽, 序列, 反馈, feedback, CQI, SINR, CSI, delay, drift, second, SSB, TRS, reference signal, target

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2020155849 A1 (HUAWEI TECHNOLOGIES CO., LTD.) 06 August 2020 (2020-08-06) description, pages 16-30 | 1-48, 58-62 |
| X | CN 115379489 A (VIVO MOBILE COMMUNICATION CO., LTD.) 22 November 2022 (2022-11-22) description, paragraphs 41-412 | 49-57, 60-62 |
| A | CN 114070527 A (DATANG MOBILE COMMUNICATIONS EQUIPMENT CO., LTD.) 18 February 2022 (2022-02-18) entire document | 1-62 |
| A | WO 2022155975 A1 (GUANGDONG OPPO MOBILE TELECOMMUNICATIONS CORP., LTD.) 28 July 2022 (2022-07-28) entire document | 1-62 |
| A | QUALCOMM INC. "Discussion on CSI-RS Design" *3GPP TSG RAN WG1 #90, R1-1713405*, 25 August 2017 (2017-08-25), entire document | 1-62 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 November 2024** | **22 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/116500**

| Patent document cited in search report | | | Publication date (day/month/year) | Patent family member(s) | | | Publication date (day/month/year) |
|---|---|---|---|---|---|---|---|
| WO | 2020155849 | A1 | 06 August 2020 | CN | 111511010 | A | 07 August 2020 |
| CN | 115379489 | A | 22 November 2022 | WO | 2022242676 | A1 | 24 November 2022 |
| CN | 114070527 | A | 18 February 2022 | WO | 2022028585 | A1 | 10 February 2022 |
| | | | | EP | 4195565 | A1 | 14 June 2023 |
| | | | | US | 2023318688 | A1 | 05 October 2023 |
| WO | 2022155975 | A1 | 28 July 2022 | CN | 116762311 | A | 15 September 2023 |

Form PCT/ISA/210 (patent family annex) (July 2022)

**REFERENCES CITED IN THE DESCRIPTION**

**Patent documents cited in the description**

- CN 202311150500